(19) Europäisches Patentamt
European Patent Office
Office européen des brevets

(11) **EP 3 117 237 B1**

(12) **FASCICULE DE BREVET EUROPEEN**

(45) Date de publication et mention
de la délivrance du brevet:
**30.10.2019 Bulletin 2019/44**

(51) Int Cl.:
***G01S 15/89*** (2006.01)　　***G01S 7/52*** (2006.01)

(21) Numéro de dépôt: **15709690.0**

(22) Date de dépôt: **13.03.2015**

(86) Numéro de dépôt international:
**PCT/EP2015/055334**

(87) Numéro de publication internationale:
**WO 2015/136089 (17.09.2015 Gazette 2015/37)**

(54) **SONAR A ANTENNE SYNTHETIQUE ET PROCEDE DE FORMATION DE VOIES D'ANTENNE SYNTHETIQUE**

SONAR MIT SYNTHETISCHER ANTENNE UND VERFAHREN ZUR FORMUNG VON KANÄLEN FÜR SYNTHETISCHE ANTENNE

SYNTHETIC ANTENNA SONAR AND METHOD FOR FORMING SYNTHETIC ANTENNA CHANNELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2014 FR 1400614**

(43) Date de publication de la demande:
**18.01.2017 Bulletin 2017/03**

(73) Titulaire: **THALES**
**92400 Courbevoie (FR)**

(72) Inventeurs:
• **BURLET, Nicolas**
**29810 Plouarzel (FR)**
• **MANDELERT, Nicolas**
**29830 Ploudalmezeau (FR)**
• **GUTHMANN, Pierre**
**29200 Brest (FR)**

(74) Mandataire: **Derval, Estelle et al**
**Marks & Clerk France**
**Conseils en Propriete Industrielle**
**Immeuble Visium**
**22, avenue Aristide Briand**
**94117 Arcueil Cedex (FR)**

(56) Documents cités:
**FR-A1- 2 769 372　　US-A- 4 244 036**
**US-A1- 2009 175 128　　US-A1- 2013 016 584**

• **BELLEC R ET AL: "Repeat-track SAS interferometry : feasibility study", OCEANS, 2005. PROCEEDINGS OF MTS/IEEE WASHINGTON, DC, USA 18-23 SEPT. 2005, PISCATAWAY, NJ, USA,IEEE, PISCATAWAY, NJ, USA, 18 septembre 2005 (2005-09-18), pages 1-7, XP010921040, ISBN: 978-0-933957-34-3**

**Description**

La présente invention se situe dans le domaine de l'imagerie sonar et la détection et la classification d'objets au moyen d'un sonar à antenne synthétique. Elle concerne plus particulièrement la guerre des mines et la détection et la classification des mines au moyen d'un sonar à antenne synthétique.

La question de la classification des objets est un problème difficile à résoudre notamment pour les mines de fond posées sur un fond marin texturé, ou pour des mines furtives. L'emploi d'un sonar en tant que sonar latéral très haute résolution à antenne synthétique offre une réponse à ce problème mais reste insuffisant. Par sonar latéral on entend un sonar qui émet des impulsions acoustiques selon un axe de visée présentant un angle de gisement sensiblement égal à 90°, c'est-à-dire qui est sensiblement perpendiculaire à la trajectoire d'un porteur à bord duquel il est embarqué. Le sonar est positionné sur l'un des flancs d'un poisson ou porteur qui est immergé. Le porteur peut être autonome ou remorqué par un bâtiment de surface. Par très haute résolution, on entend généralement une résolution inférieure à 10 cm pour un sonar présentant une fréquence supérieure à 100 kHz.

Le sonar à antenne synthétique a pour but d'améliorer la résolution, à une portée donnée, sans augmenter la dimension linéaire de l'antenne de réception. Le principe du sonar à antenne synthétique consiste à utiliser une antenne physique formée par un réseau linéaire de N transducteurs. Dans ce type de sonar, lors de l'avancement du porteur, un dispositif d'émission, ou antenne d'émission, émet P impulsions successives dans un secteur élémentaire fixe par rapport au porteur. On utilise les signaux reçus par les N transducteurs de l'antenne physique de réception à P instants, et donc à P emplacements successifs pour former les voies de l'antenne synthétique. La résolution des images obtenues, c'est-à-dire la résolution des voies des antennes synthétiques, est sensiblement équivalente à celle d'une antenne virtuelle dont la longueur correspond au double environ de la longueur parcourue par l'antenne physique pendant ces P instants successifs.

La construction des voies de l'antenne synthétique est réalisée par un procédé de traitement des signaux rétrodiffusés mesurés par l'antenne dit « procédé de traitement d'antenne synthétique ». Ce procédé est classique pour l'homme du métier. Pour former une voie de l'antenne synthétique du sonar, on additionne les signaux mesurés par l'antenne de réception en utilisant des retards correspondant à la direction de la voie formée et aux différents emplacements des transducteurs de l'antenne en fonction de leurs positions sur l'antenne physique et du mouvement de celle-ci.

La principale difficulté de l'application du principe de l'antenne synthétique réside dans la détermination des retards de formation de voie. Alors que ces retards ne dépendent que de la distance et de la direction du point visé pour une antenne conventionnelle, ceux d'une antenne synthétique dépendent du mouvement du porteur pendant sa durée de formation. Déterminer les retards est d'autant plus difficile que cette durée de formation, c'est-à-dire que le nombre de récurrence est grand, ce qui va de paire avec une meilleure résolution.

La demande de brevet portant le numéro de publication FR 2769372 part du constat que la précision nécessaire sur la mesure de la position de l'antenne de réception est hors de portée d'une centrale inertielle (INS) car l'erreur sur la mesure de la position spatiale du porteur qu'elle équipe est trop importante. Par ailleurs, elle constate que dans les méthodes dites d'autocalibration ou d'autofocalisation qui permettent d'obtenir la position de l'antenne à partir du traitement des différents signaux mesurés par l'antenne, la précision sur l'angle de rotation de l'antenne entre deux récurrences constitue le facteur limitant la précision de la méthode. Elle propose donc, pour remédier à ces inconvénients, un procédé de correction des effets des mouvements parasites de l'antenne dans un sonar à antenne synthétique, c'est-à-dire de correction des effets dus aux variations angulaires de l'antenne, dans lequel on forme une antenne synthétique sur M récurrences du sonar et on corrige les variations du mouvement de l'antenne physique en effectuant une autocalibration par intercorrélation des récurrences successives, en utilisant la mesure de rotation de l'antenne obtenue au moyen d'un gyromètre et en mesurant l'angle de site du signal rétrodiffusé avec une antenne auxiliaire perpendiculaire à l'antenne physique. Ce procédé permet d'améliorer de façon importante la résolution de l'image sonar obtenue à partir des voies de l'antenne synthétique.

Le procédé, décrit dans la demande de brevet portant le numéro de publication FR2769372, oblige à équiper le sonar d'une antenne auxiliaire perpendiculaire à l'antenne physique.

Un but de la présente invention est de proposer un sonar qui offre la possibilité de s'affranchir d'une antenne auxiliaire.

A cet effet, l'invention a pour objet un sonar à antenne synthétique destiné à se déplacer selon un premier axe, le sonar comprenant un dispositif d'émission configuré pour émettre, à chaque récurrence, au moins une impulsion acoustique vers une zone observée dans un ensemble sectorisé comprenant au moins un secteur, le sonar comprenant une première antenne physique de réception s'étendant selon le premier axe permettant d'acquérir des mesures de signaux rétrodiffusés issus de ladite impulsion et un dispositif de traitement configuré pour former, sur R récurrences, pour chaque secteur de l'ensemble sectorisé, des voies d'antenne synthétique à partir de mesures de signaux rétrodiffusés par la zone observée issus d'impulsions acoustiques émises dans ledit secteur, le sonar comprenant au moins un gyromètre, ledit dispositif de traitement étant configuré de façon à corriger les variations du mouvement de la première antenne de réception lors de la formation des voies d'antenne synthétique dudit ensemble sectorisé en effectuant une autocalibration par intercorrélation des récurrences successives, en utilisant des mesures de rotation de la première antenne de réception obtenues avec ledit au moins un gyromètre et en utilisant des estimations d'angles de site de signaux rétrodiffusés pour déterminer des plans images des signaux rétrodiffusés et pour projeter lesdites mesures de rotation sur lesdits plans images, les projections obtenues étant utilisées pour effectuer l'autocalibration, caractérisé en ce que dans ledit dispositif de traitement lors de la formation des voies d'antenne synthétique d'au moins un secteur de l'ensemble sectorisé, appelé secteur bathymétrique, on utilise des estimations d'angles de site de signaux rétrodiffusés obtenues à partir d'une carte bathymétrique comprenant les positions tridimensionnelles, définies dans le référentiel terrestre, d'une pluralité de points de la zone observée.

Avantageusement, le dispositif d'émission est configuré pour émettre, à chaque récurrence, des impulsions acoustiques discernables vers une zone observée, dans des secteurs respectifs différents, comprenant un premier secteur et au moins un deuxième secteur, selon un premier axe de visée et respectivement un deuxième axe de visée présentant des angles de gisement différents, dans lequel ledit au moins un secteur bathymétrique comprend au moins un deuxième secteur, et dans lequel la carte bathymétrique est obtenue à partir de mesures de premiers angles de site de premiers signaux rétrodiffusés issus d'impulsions acoustiques émises dans ledit premier secteur.

Le sonar peut comprendre un réseau de transducteurs comprenant pluralité de transducteurs répartis selon un deuxième axe perpendiculaire au premier axe, lesdits transducteurs formant le réseau de transducteurs étant dimensionnés et configurés de façon que leurs lobes de réception couvrent le premier secteur mais que ledit au moins un deuxième secteur soit situé au moins partiellement en dehors de leurs lobes de réception, les premiers signaux rétrodiffusés étant acquis au moyen du réseau de transducteurs.

Plus précisément, l'antenne physique de réception peut comprendre une première antenne physique élémentaire formée de premiers transducteurs dimensionnés et configurés de façon que leurs lobes de réception couvrent le premier secteur mais de façon que ledit au moins un deuxième secteur soit au moins partiellement situés en dehors de leurs lobes de réception. Le sonar comprend une deuxième antenne physique élémentaire formée de deuxièmes transducteurs dimensionnés et configurés de façon que leurs lobes de réception couvrent le premier et le deuxième secteurs. Le dispositif de traitement est configuré de façon à former, lors de la formation des voies d'antenne synthétique, des voies d'une première antenne synthétique à partir de mesures de premiers signaux rétrodiffusés issus du premier secteur et acquises au moyen de la première antenne élémentaire et des voies d'une deuxième antenne synthétique à partir de mesures de deuxièmes signaux rétrodiffusés issus d'impulsions émises dans ledit deuxième secteur et acquises au moyen de la deuxième antenne élémentaire.

Avantageusement, le réseau de transducteurs est formé par la première antenne élémentaire et une autre antenne identique à la première antenne élémentaire et superposée à la première antenne physique élémentaire selon le deuxième axe.

Avantageusement, la carte bathymétrique est mémorisée dans une mémoire du sonar avant d'imager la zone observée.

L'invention a également pour objet un système sonar comprenant le sonar de l'invention, et un porteur, le sonar étant installé sur le porteur.

L'invention a aussi pour objet un procédé de formation de voies d'antennes synthétiques d'un sonar sur R récurrences du sonar, le sonar étant destiné à se déplacer selon un premier axe, le sonar comprenant un dispositif d'émission configuré pour émettre, à chaque récurrence, au moins une impulsion acoustique vers une zone observée dans un ensemble sectorisé comprenant au moins un secteur, le sonar comprenant une première antenne physique de réception s'étendant selon le premier axe permettant d'acquérir des mesures de signaux rétrodiffusés issus de ladite au moins une impulsion et un dispositif de traitement configuré pour former, sur R récurrences, pour chaque secteur de l'ensemble sectorisé, des voies d'antenne synthétique à partir de mesures de signaux rétrodiffusés par la zone observée issus d'impulsions acoustiques émises dans ledit secteur, le sonar comprenant au moins un gyromètre, le procédé comprenant une étape de formation, lors de laquelle on forme, pour chaque secteur sur R récurrences, des voies d'antenne synthétique à partir de mesures de signaux rétrodiffusés par la zone observée issus d'impulsions acoustiques émises dans ledit secteur, lors de laquelle, on corrige les variations du mouvement de la première antenne de réception lors de la formation des voies d'antenne synthétique dudit ensemble sectorisé en effectuant une autocalibration par intercorrélation des récurrences successives, en utilisant des mesures de rotation de la première antenne de réception obtenues avec ledit au moins un gyromètre et en utilisant des estimations d'angles de site de signaux rétrodiffusés pour déterminer des plans images des signaux rétrodiffusés et pour projeter lesdites mesures de rotation sur lesdits plans images, les projections obtenues étant utilisées pour effectuer l'autocalibration, caractérisé en ce que lors de l'étape de formation lors de la formation des voies d'antenne synthétique d'au moins un secteur de l'ensemble sectorisé, appelé secteur bathymétrique, on utilise des estimations d'angles de site de signaux rétrodiffusés obtenues à partir d'une carte bathymétrique comprenant la position tridimensionnelle d'une pluralité de points de la zone observée.

Avantageusement, le dispositif d'émission est configuré pour émettre, à chaque récurrence, des impulsions acoustiques discernables vers une zone observée, dans des secteurs respectifs différents, comprenant un premier secteur et au moins un deuxième secteur, selon un premier axe de visée et respectivement un deuxième axe de visée présentant des angles de gisement différents Ledit au moins un secteur bathymétrique comprend au moins un deuxième secteur. La carte bathymétrique est obtenue à partir de mesures de premiers angles de site de premiers signaux rétrodiffusés issus d'impulsions acoustiques émises dans ledit premier secteur.

Avantageusement, le sonar comprend un réseau de transducteurs comprenant une pluralité de transducteurs élémentaires répartis selon un deuxième axe perpendiculaire au premier axe les, lesdits transducteurs formant le réseau de transducteurs étant dimensionnés et configurés de façon que leurs lobes de réception couvrent le premier secteur mais que ledit au moins un deuxième secteur soit situé au moins partiellement en dehors de leurs lobes de réception, les premiers signaux rétrodiffusés étant acquis au moyen du réseau de transducteurs, le procédé comprenant avantageusement pour chaque récurrence, une étape de mesure de premiers angles de site de premiers signaux rétrodiffusés au moyen du réseau de transducteurs, une étape de calcul d'estimations de premiers angles de site, consistant à transposer des mesures des premiers angles de site dans un référentiel terrestre. Le procédé comprend en outre une étape de réalisation de la carte bathymétrique à partir des estimations des premiers angles de site, la carte bathymétrique comprenant des coordonnées tridimensionnelles, dans le référentiel terrestre, de points de sonde ayant rétrodiffusé les premiers signaux rétrodiffusés.

Avantageusement, le procédé comprend une étape d'estimation des angles de site des signaux rétrodiffusés issus d'impulsions émises dans ledit secteur bathymétrique à partir de la carte bathymétrique. Le procédé comprend, pour chacun des signaux rétrodiffusés, une étape de calcul de la position d'un point Mp de la carte bathymétrique le plus proche d'une portion d'un cercle Cp obtenu par rotation, autour du premier axe d'un point B situé sur l'autre axe de visée à une distance de l'antenne correspondant à la distance séparant l'antenne d'un point de sonde ayant généré le signal rétrodiffusé, une étape de calcul d'un premier point d'intersection Ip entre la carte bathymétrique et la portion de cercle Cp à partir du point le plus proche Mp, et une première étape de calcul, dans le référentiel terrestre, de l'angle de site du point d'intersection.

Le point d'intersection Ip peut être le point d'intersection entre un plan horizontal, dans le référentiel terrestre, passant par le point le plus proche Mp, et la portion de cercle Cp.

Avantageusement, le procédé comprend une deuxième étape de calcul d'un deuxième point d'intersection Ip entre la carte bathymétrique et la portion de cercle Cp à partir du point le plus proche Mp et d'autres points de la carte bathymétrique, et si un deuxième point d'intersection est obtenu, une deuxième étape de calcul de l'angle de site du deuxième point d'intersection.

L'antenne physique de réception peut comprendre une première antenne physique élémentaire formée de premiers transducteurs dimensionnés et configurés de façon que leurs lobes de réception couvrent le premier secteur mais de façon que ledit au moins un deuxième secteur soit au moins partiellement situés en dehors de leurs lobes de réception, L'étape de formation de voies comprend alors une étape de formation de voies d'une première antenne synthétique à partir de mesures de signaux rétrodiffusés issus d'impulsions émises dans ledit premier secteur acquises au moyen de la première antenne élémentaire, lors de laquelle les estimations d'angles de site de signaux rétrodiffusés utilisées pour déterminer des plans images des signaux rétrodiffusés et pour projeter lesdites mesures de rotation sur lesdits plans images sont des estimations des premiers angles de site des premiers signaux rétrodiffusés, les premiers signaux rétrodiffusés étant issus d'impulsions émises dans ledit premier secteur, les estimations des premiers angles de site étant des transpositions des mesures des premiers angles de site dans le référentiel terrestre.

L'invention a enfin pour objet un produit programme d'ordinateur comprenant des instructions de code de programme pour l'exécution des étapes du procédé selon l'invention lorsque le programme est exécuté sur ordinateur.

L'invention proposée offre la possibilité de s'affranchir de l'antenne auxiliaire. Elle permet également de ne pas diminuer la résolution du sonar à antenne synthétique, c'est-à-dire sans diminuer ses capacités de détection et de classification. Autrement dit, la résolution obtenue est comparable à celle obtenue au moyen du procédé décrit dans le document FR 2769372, c'est-à-dire à la résolution obtenu au moyen d'un procédé utilisant une méthode d'autofocalisation dans laquelle les mouvements parasites de l'antenne sont corrigés.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement les éléments d'un exemple de sonar selon l'invention,
- la figure 2 représente schématiquement le sonar de la figure 1 installé sur un porteur en vue de dessus lors de l'émission d'impulsions acoustiques dans trois secteurs,
- la figure 3 représente schématiquement, de côté, la première antenne physique de réception et une deuxième antenne de réception du sonar de la figure 1,
- la figure 4 représente schématiquement un angle de site d'un signal rétrodiffusé par une cible A tel que calculé et utilisé dans le procédé selon l'invention,
- la figure 5 représente un schéma synoptique d'un exemple de procédé selon l'invention,
- la figure 6 représente un schématiquement la construction de la carte bathymétrique,

- la figure 7 représente schématiquement le calcul du positionnement des points de sonde pour le deuxième angle de site

D'une figure à l'autre, les mêmes éléments sont repérés par les mêmes références.

L'invention se rapporte à un sonar mono-aspect ou multi-aspect à antenne synthétique. Par sonar mono-aspect à antenne synthétique, on entend un sonar à antenne synthétique destiné à se déplacer selon un premier axe, le sonar comprenant un dispositif d'émission configuré pour émettre, à chaque récurrence, une impulsion acoustique vers une zone observée dans un unique secteur, le sonar comprenant une première antenne physique de réception permettant d'acquérir des mesures de signaux rétrodiffusés issus de ladite impulsion et un dispositif de traitement configuré pour former, sur R récurrences, des voies d'antenne synthétique à partir de mesures de signaux rétrodiffusés par la zone observée issus d'impulsions acoustiques émises dans ledit secteur. Les impulsions acoustiques sont émises selon un unique axe de visée dans un unique secteur entourant l'axe de visée. Cet axe de visée peut être solidaire de l'antenne ou être dirigé selon une direction fixe dans le référentiel terrestre, par exemple, au moyen d'un dispositif de stabilisation. Par secteur dans lequel est émis une impulsion acoustique on entend le secteur d'ouverture à -3dB dans lequel est émis le lobe principal de l'impulsion acoustique émise.

L'utilisation d'un sonar mono-aspect à antenne synthétique n'est pas satisfaisante pour l'étape de classification des objets détectés sur les images sonar. Par classification, on entend la caractérisation de la nature de l'objet détecté sur l'image (comme par exemple sa taille et/ou sa forme ou encore la caractérisation de l'objet en tant que mine ou non mine). Afin d'améliorer les performances en classification, on multiplie les points de vue des objets détectés. Plus les observations d'un même objet sous des angles différents sont nombreuses et plus il est aisé de classifier cet objet. Pour multiplier les points de vue une solution consiste à utiliser un sonar multi-aspect à antenne synthétique. Cette solution ne nécessite pas d'effectuer plusieurs passes du sonar sur la surface d'observation selon des trajectoires différentes. Elle est par ailleurs peu consommatrice en énergie. Par conséquent, cette solution est adaptée à une installation sur des engins sous-marin autonomes. Elle ne nécessite pas de connaitre le positionnement absolu du porteur avec grande précision ni de mettre en œuvre des techniques de recalage pour associer différentes vues d'un même objet entre elles. Elle permet en outre d'améliorer les performances en détection des objets sur les images sonar.

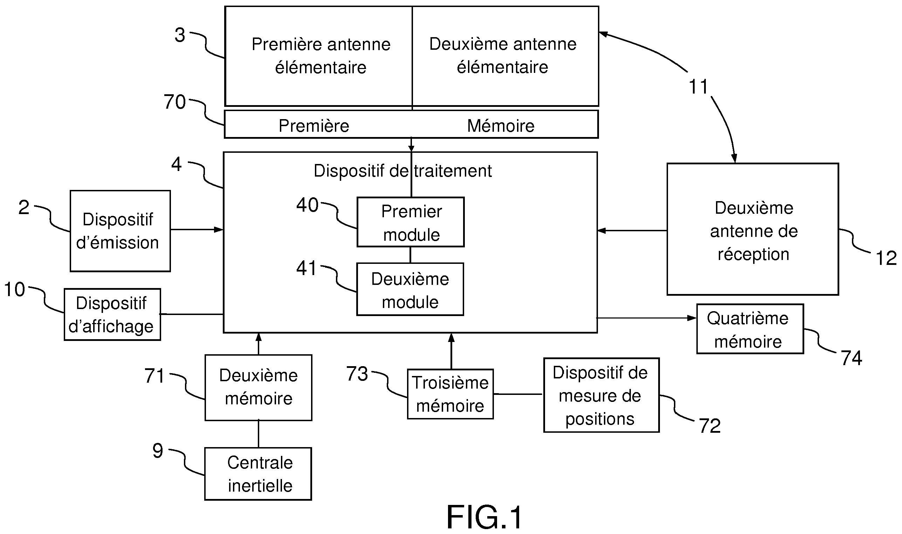

Sur la figure 1, on a représenté les éléments constitutifs d'un exemple de sonar 1 selon l'invention. Dans cet exemple, le sonar est un sonar multi-aspect. Il comprend un dispositif d'émission 2, comprenant une ou plusieurs antennes d'émission. Le dispositif d'émission 2 est configuré de façon à émettre à chaque récurrence, des impulsions acoustiques vers une zone observée, par exemple un fond marin. Les impulsions émises lors d'une récurrence sont émises dans un ensemble sectorisé comprenant plusieurs secteurs. A chaque récurrence, les émissions émises dans les secteurs respectifs sont discernables. Par exemple, les impulsions émises dans les secteurs respectifs sont émises avec des porteuses distinctes les unes des autres, c'est à dire situées dans des bandes de fréquence disjointes. En variante, les impulsions sont émises avec des porteuses présentant une même fréquence de porteuse mais sont distinguées les unes des autres par des codes orthogonaux, c'est-à-dire par des modulations orthogonales. Les signaux rétrodiffusés par le fond marin et provenant des différents secteurs sont alors discernables de la même manière que les impulsions émises dans ces différents secteurs, par exemple, par filtrage ou par démultiplexage. Lors de chaque récurrence, les impulsions émises dans les différents secteurs sont, par exemple, émises simultanément ou sensiblement simultanément.

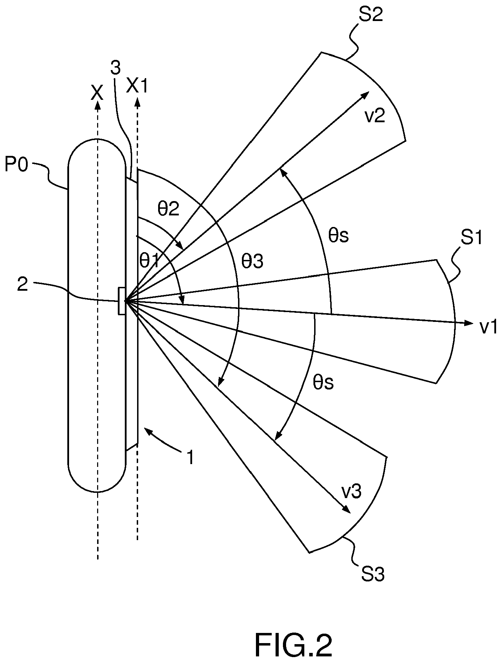

Sur la figure 2, on a représenté les secteurs S1, S2 et S3 dans lesquels le dispositif d'émission 2 du sonar selon l'invention émet les impulsions acoustiques à chaque récurrence. Le dispositif d'émission 2 émet 3 impulsions dans trois secteurs S1, S2, S3 respectifs à chaque récurrence selon les axes de visée respectifs v1, v2, v3. Le sonar 1 est destiné à se déplacer selon un premier axe X1 pendant l'émission des impulsions acoustiques lors des récurrences successives. Le sonar 1 et monté sur un porteur PO. Sur la réalisation de la figure, le premier axe X1 est parallèle à la direction X de déplacement du porteur PO. Les axes de visée v1, v2, v3 forment des angles de gisement respectifs différents θ1, θ2, θ3 avec le premier axe X1. Avantageusement, les axes de visée v1, v2, v3 présentent le même angle de site, l'angle de site étant défini dans le référentiel terrestre. En variante, les axes de visée présentent un même angle de site dit local, dans le repère lié au sonar, c'est-à-dire forment le même angle avec un plan parallèle à l'axe X1 et perpendiculaire au plan formée par les surfaces actives des transducteurs.

Les axes de visée v1, v2, v3 comprennent un axe de visée latéral v1 qui est sensiblement perpendiculaire au premier axe X1, et deux axes de visée supplémentaires v2 et v3 qui sont symétriques l'un de l'autre par rapport à un plan de symétrie perpendiculaire à la direction d'avancement X et passant par l'axe v1. Autrement dit, l'angle de gisement θ1 de l'axe v1 est égal à 90°. On l'appellera par la suite l'axe de visée latéral. Les axes v2 et v3 forment, par exemple, des angles θs de -35° et respectivement de 35° en gisement avec l'axe v1. En variante, les axes de visées supplémentaires ne sont pas symétriques l'un de l'autre par rapport au plan de symétrie. L'axe v2 est appelé l'axe de visée vers l'avant et l'axe de visée v3 est appelé l'axe de visée vers l'arrière. Le dépointage des axes de visée v2 et v3 par rapport au premier axe v1 est obtenu électroniquement ou mécaniquement. Dans ce dernier cas, le dispositif d'émission comprend trois antennes d'émission pointant selon trois axes de visée différents.

Sur la réalisation de la figure 2, les secteurs S1, S2, S3 sont disjoints. Les ouvertures des secteurs adjacents sont inférieures à l'angle formé entre les deux secteurs dans le plan de référence. Avantageusement, l'ouverture angulaire de chaque secteur est faible, c'est-à-dire inférieure à 10°. Ces caractéristiques permettent de limiter les coûts de traitement des signaux rétrodiffusés en limitant la taille totale du secteur insonifié tout en maximisant la couverture horaire efficace totale du sonar. De manière générale, l'ouverture des secteurs doit être suffisamment large pour obtenir la résolution souhaitée à la fréquence d'émission du sonar. Le fait de limiter la largeur du secteur insonifié permet de limiter le pas entre les hydrophones de la première antenne de réception et donc leur nombre et leur coût. En variante, les secteurs sont jointifs ou se recouvrent partiellement deux à deux. Les secteurs S1 à S3 présentent, par exemple, la même ouverture en gisement et la même ouverture en site. En variante, les secteurs présentent des ouvertures en gisement et/ou en site différentes.

Le nombre de secteurs est en variante différent de 3, par exemple égal à 5 ou à 2. L'important est qu'à chaque récurrence, le dispositif d'émission 2 émette des impulsions acoustiques discernables dans les secteurs respectifs comprenant au moins un premier secteur et un autre secteur distinct du premier secteur.

Le sonar 1 comprend une première antenne physique de réception 3 permettant de mesurer les signaux rétrodiffusés par le fond marin et étant issus des impulsions acoustiques émises dans les différents secteurs à chaque récurrence. Le sonar 1 comprend également un dispositif de traitement 4, comprenant par exemple au moins un calculateur, configuré de façon à former les voies d'une antenne synthétique pour chacun des secteurs. Autrement dit, le dispositif de traitement 4 est configuré de façon à former des voies d'antennes synthétique ce qui consiste à former, pour chaque secteur, des voies d'une antenne synthétique à partir de mesures des signaux rétrodiffusés issus d'impulsions acoustiques émises dans le secteur considéré, c'est-à-dire à partir de mesures de signaux rétrodiffusés par la zone observée dans le secteur considéré. Le dispositif de traitement 4 est configuré pour former, sur R récurrences, les voies d'une première antenne synthétique à partir de mesures des signaux rétrodiffusés issus d'impulsions acoustiques émises dans le premier secteur S1 et les voies d'au moins une autre antenne synthétique, les voies de chaque autre antenne synthétique étant formées à partir des mesures des signaux rétrodiffusés issus d'impulsions acoustiques émises dans un des autres secteurs. Les mesures des signaux rétrodiffusés utilisées sont des mesures réalisées par la première antenne de réception 3. Dans le cas représenté sur la figure 2, le dispositif de traitement 4 forme donc les voies de trois antennes synthétiques, une pour chacun des secteurs S1, S2, S3.

Sur la figure 2, la première antenne de réception 3 est disposée à tribord, le dispositif d'émission 2 émettant des impulsions acoustiques à tribord. En variante, le sonar comprend deux dispositifs d'émission, un émettant à bâbord et un émettant à tribord, et deux antennes de réception, une à bâbord et une à tribord.

La première antenne de réception 3 est une antenne longitudinale s'étendant linéairement selon un premier axe X1. Le premier axe X1 est sensiblement parallèle à la direction X d'avancement du porteur PO. L'antenne de réception comprend N+M capteurs. Elle comprend, de manière générale, une ou plusieurs antennes physiques de réception élémentaires.

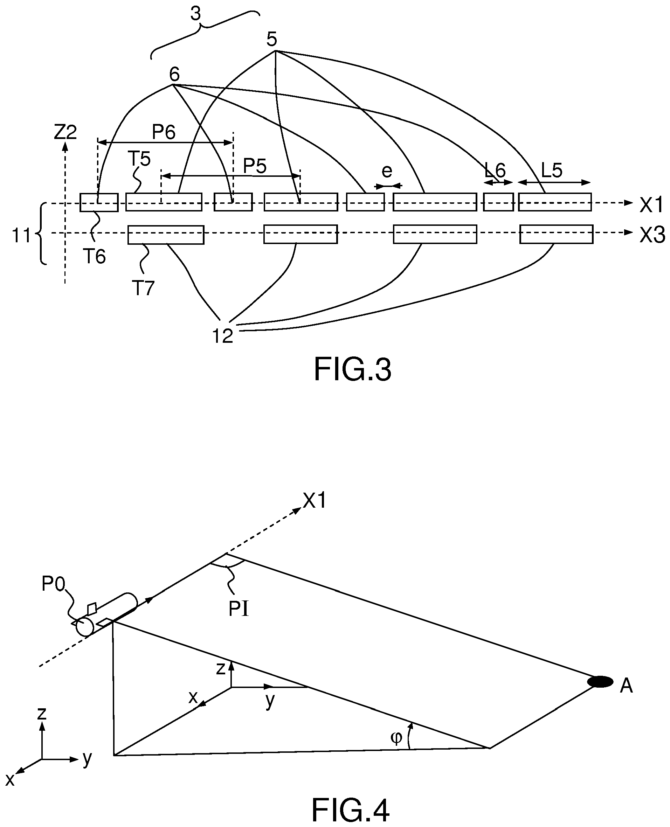

Sur la figure 3, on a représenté une vue de côté des antennes de réception du sonar selon l'invention. La première antenne de réception 3 est une antenne composite formée d'un réseau linéaire de N +M transducteurs. Elle comprend une première antenne élémentaire 5 qui comprend un réseau linéaire de M (ici 4) premiers transducteurs T5 identiques espacés le long du premier axe X1 et une deuxième antenne élémentaire 6 comprenant un réseau linéaire de N (ici 4) deuxièmes transducteurs T6 identiques espacés le long du premier axe X1. Les premiers transducteurs T5 sont séparés deux à deux par un deuxième transducteur T6 selon le premier axe X1 et les deuxièmes transducteurs T6 sont séparés deux à deux par un premier transducteur T5 selon l'axe X1. Autrement dit, le réseau linéaire de N+M transducteurs selon l'axe X1, comprend en alternance, selon le premier axe X1 un premier transducteur et un deuxième transducteur. Les transducteurs consécutifs sont séparés d'un espace présentant une longueur e fixe selon le premier axe de sorte que le premier pas P5 entre les premiers transducteurs est égal au deuxième pas P6 entre les deuxièmes transducteurs.

Sur la réalisation de la figure 3, les premiers transducteurs T5 présentent une largeur L5 plus importante que la largeur L6 des deuxièmes transducteurs T6 selon le premier axe X1. Par conséquent, l'ouverture en gisement des lobes de réception des premiers transducteurs T5 de la première antenne élémentaire 5 est plus faible que l'ouverture en gisement des lobes de réception des deuxièmes transducteurs T6 de la deuxième antenne élémentaire 6. Avantageusement, les premiers transducteurs T5 sont dimensionnés et configurés de façon que seul le premier secteur S1 soit inclus dans leurs lobes de réception et de façon que les autres secteurs S2, S3 soient situés en dehors des lobes de réception des premiers transducteurs T5 constituant la première antenne élémentaire 5. Autrement dit, les premiers transducteurs présentent une directivité qui permet à la première antenne 5 d'imager le premier secteur S1 mais qui ne permet pas d'imager simultanément les autres secteurs. En revanche, le rapport signal sur bruit de la première antenne élémentaire est plus important que le rapport signal sur bruit de la deuxième antenne. L'ouverture en gisement des transducteurs de la première antenne élémentaire 5 est avantageusement sensiblement égale à l'ouverture en gisement du premier secteur S1. En variante, les premiers transducteurs T5 sont dimensionnés et configurés de façon que le premier secteur soit inclus dans les lobes de réception des premiers transducteurs T5 de la première antenne élémentaire 5 et de façon que les autres secteurs S2, S3 soient au moins partiellement inclus dans les lobes de réception des premiers transducteurs T5 de la première antenne élémentaire. Cette variante génère une antenne première synthétique présentant un moins bon rapport signal sur bruit mais un coût moindre.

Les antennes élémentaires 5, 6 permettent chacune de mesurer les signaux rétrodiffusés issus de toutes les impulsions émises lors d'une récurrence par le dispositif d'émission 2. Le dispositif de traitement 4, est configuré de façon à discriminer les mesures de signaux rétrodiffusés par le fond provenant des impulsions respectives et de générer les voies de trois antennes synthétiques. Le dispositif de traitement 4 comprend un premier module 40 permettant de discriminer les mesures des signaux rétrodiffusés selon les secteurs des impulsions acoustiques dont ils sont issus, c'est à dire des secteurs dans lesquels se trouvent les cibles qui ont rétrodiffusé les signaux, et un deuxième module 41 permettant de générer les voies des antennes synthétiques à partir de mesures de ces signaux rétrodiffusés dans les secteurs respectifs. Le deuxième module 41 est configuré de façon à générer les voies de la première antenne synthétique à partir de premières mesures de premiers signaux rétrodiffusés par la zone observée issus d'impulsions émises dans le premier secteur S1, lesdites premières mesures étant acquises par la première antenne élémentaire 5. Le deuxième module 41 est configuré de façon à générer les voies des deuxièmes et troisièmes antennes synthétiques à partir de deuxièmes mesures de signaux rétrodiffusés par le fond issus d'impulsions émises dans le deuxième et dans le troisième secteur S2 et S3, les deuxièmes mesures étant acquises par la deuxième antenne élémentaire 6. Cet agencement et le mode de traitement associés permettent d'obtenir une première antenne synthétique de haute résolution et présentant un très bon rapport signal sur bruit et d'autres antennes synthétiques présentant une très haute résolution sans avoir à échantillonner excessivement l'antenne de réception, c'est-à-dire sans prévoir un pas inter-transducteurs dont la valeur serait de l'ordre de la demi-longueur d'onde de l'impulsion acoustique utilisée. Cela permet de limiter le nombre de transducteurs requis, ce qui présente des avantages en termes de coût et de dépenses énergétiques.

Le dispositif de traitement 4 permet aussi de générer une image représentant les voies d'antenne synthétique de chaque antenne synthétique. Ces images synthétiques sont, par exemple, mais non nécessairement, des images défilantes (dites de type « waterfall » en terminologie anglo-saxonne). Elles représentent les voies des antennes synthétiques sur R récurrences et à la R+1ieme récurrence, la récurrence d'indice 1 disparait de l'écran pour laisser apparaitre la représentation de la R+1ieme récurrence. Ces images ne sont pas focalisées sur un point particulier dans le référentiel géocentrique. Elles présentent ainsi l'avantage de permettre une détection d'objets et pas uniquement une classification d'un objet préalablement détecté. Elles représentent un nombre de points de vue d'une zone observée égale au nombre de secteurs, les points de vue étant acquis sensiblement simultanément. Le sonar 1 selon l'invention comprend un dispositif d'affichage 10 permettant d'afficher simultanément lesdites images synthétiques. Il permet à un opérateur d'observer simultanément différents points de vue synchronisés d'une zone observée ce qui lui facilite les opérations de détection et de classification d'objets.

Les modules sont par exemple des fonctions de calcul d'un même calculateur ou des calculateurs différents. Le premier module peut comprendre des filtres et/ou un démultiplexeur.

Comme pour les sonars mono-aspects, la résolution des antennes synthétiques d'un sonar multi-aspect est limitée par les écarts de l'antenne de réception par rapport à une trajectoire de navigation rectiligne et uniforme. Par conséquent, la formation des voies de chacune des antennes synthétiques est réalisée en corrigeant les effets des mouvements parasites de l'antenne de réception 3 en utilisant le principe de correction décrit dans la demande de brevet FR 2769372. Le dispositif de traitement 4 est configuré de sorte que la correction des variations du mouvement de la première antenne de réception physique 3 est réalisée, pour chaque antenne synthétique, en effectuant une autocalibration par intercorrélation des récurrences successives, en utilisant des mesures des rotations de l'antenne de réception entre des récurrences successives obtenues au moyen d'au moins un gyromètre 9 et en utilisant des estimations, dans le référentiel terrestre, d'angles de site de signaux rétrodiffusés entre ces deux récurrences. Chaque gyromètre fait par exemple partie d'une centrale inertielle 9. L'ensemble des gyromètres forme avantageusement une centrale inertielle.

Sur la figure 4, on a représenté un référentiel terrestre x, y, z représentant la direction verticale dans le référentiel terrestre et le plan (x,y) un plan horizontal dans ce même référentiel. L'angle de site $\varphi$, c'est à dire l'angle de site défini dans un référentiel terrestre, d'un signal rétrodiffusé par une cible A est, dans la présente demande de brevet, l'angle formé entre le plan image PI, qui est le plan contenant la cible A et le premier axe X1, et le plan horizontal (x, y). Les angles de site ou inclinaisons en site des signaux rétrodiffusés correspondent aux angles de site des plans images de l'antenne, ou plans de visée, définis pour les points de visée ayant généré ces signaux rétrodiffusés.

Dans le sonar selon l'invention, on utilise, à chaque récurrence, des estimations d'angles de site de signaux rétrodiffusés pour définir les plans images des signaux rétrodiffusés et projeter les mesures de rotation obtenus au moyen des gyromètres sur les plans image obtenus comme cela est décrit dans la demande FR 2769372. On estime ensuite, à partir des projections des mesures de rotation obtenues, par une méthode d'auto-calibration classique, les paramètres I et $\tau$ pour chaque antenne synthétique où $\tau$ est la différence des temps de propagation aller et retour de l'impulsion sonar pour un même point de réflexion sur la zone observée (ici le fond marin), entre deux récurrences successives, I est le déplacement longitudinal de l'antenne de réception, selon le premier axe X1, entre deux récurrences successives. Ces paramètres permettent de corriger les variations du mouvement de l'antenne physique lors de la formation des voies des antennes synthétiques. La même méthode est utilisée dans le cas des sonars mono-aspect.

Par méthode d'autocalibration, on entend une méthode qui détermine ces coefficients à partir de mesures des signaux rétrodiffusés acquises par l'antenne de réception. Parmi elles, on connait en particulier des méthodes exploitant l'intercorrélation du champ acoustique sur l'antenne sur deux récurrences successives. Quand le déplacement longitudinal entre deux récurrences est plus petit que la moitié de la longueur de l'antenne de réception, le champ à l'extrémité avant de la première récurrence est fortement corrélé avec le champ à l'extrémité arrière. La longueur Lc des deux extrémités corrélées du champ de l'antenne est alors donnée par la formule : Lc = L - 2. V. Tr. Une telle méthode exploite cette corrélation pour estimer le déplacement longitudinal I, la différence $\tau$ des temps de propagation aller et retour de l'impulsion sonar pour un même point de réflexion sur le fond, et la rotation $\beta$ de la direction de visée, entre les deux récurrences. Un exemple d'une telle méthode est décrit dans le brevet américain US-A-4 244 036 (Raven).

L'utilisation des angles de site des signaux rétrodiffusés pour former les voies des différentes antennes synthétiques permet ainsi d'obtenir des voies d'antenne synthétiques et images synthétiques présentant une très haute résolution.

En résumé, les estimations des angles de site des signaux rétrodiffusés sont utilisées afin de projeter les mesures de rotation obtenues par le(s) gyromètre(s) sur les plans image des signaux rétrodiffusés, les projections obtenues étant utilisées pour effectuer l'autocalibration. Les projections des mesures de rotation sur les plans image sont les seules données dont on a besoin pour générer les antennes synthétiques en effectuant l'autocalibration. L'utilisation des projections des mesures de rotation sur les plans image permettent d'obtenir des voies d'antenne synthétique présentant une meilleure résolution qu'en utilisant les mesures de rotation obtenues au moyen des gyromètres. Ce procédé permet d'améliorer la résolution de l'image sonar obtenue à partir des voies de l'antenne synthétique. Les angles de site sont définis dans le référentiel terrestre.

Selon l'invention, lors de la formation des voies d'antenne synthétiques d'au moins un secteur de l'ensemble sectorisé, appelé secteur bathymétrique, on utilise des estimations d'angles de site de signaux rétrodiffusés prises parmi lesdites estimations d'angles de site utilisées lors de la formation de voies d'au moins une des antennes synthétiques. Les estimations sont obtenues à partir d'une carte bathymétrique comprenant des positions tridimensionnelles définies dans le référentiel terrestre de points respectifs de la zone observée.

Selon l'invention on peut par exemple prévoir que tous les secteurs insonifiés soient des secteurs bathymétriques ou bien que le seul secteur insonifié (cas mono-aspect) soit un secteur bathymétrique.

L'invention présente l'avantage de permettre de s'affranchir d'une antenne auxiliaire, telle que décrite dans la demande de brevet FR 2769372, présentant une pluralité de capteurs répartis selon un axe perpendiculaire à l'axe de la première antenne de réception. On peut par exemple utiliser une carte bathymétrique pré-existante de la zone observée mémorisée dans une mémoire du sonar avant d'imager la zone observée. Cette carte bathymétrique peut être issue d'un atlas de carte bathymétrique ou d'un relevé d'un navire hydrographique. En variante, la carte bathymétrique peut être obtenue au moyen d'un sondeur multifaisceaux ou d'un autre sonar latéral, par exemple, sans capacité bathymétrique ou au moyen d'un dispositif de mesure d'altitude du sonar associé à une hypothèse selon laquelle la zone observée présente une altitude constante. Dans ces trois derniers cas, la carte bathymétrique peut être construite lors de R récurrences du sonar ou avant les R récurrences. En résumé, la carte bathymétrique peut être obtenue au moyen d'un système extérieur au sonar selon l'invention. Avantageusement, le sonar est dépourvu d'une antenne auxiliaire présentant une pluralité de capteurs répartis selon un axe perpendiculaire à l'axe de la première antenne de réception. Un tel sonar présente un coût réduit tant au niveau matériel qu'au niveau traitement, un encombrement réduit, une masse réduite, consomme une énergie réduite du fait de la réduction du coût du traitement et de la réduction de l'encombrement et de la masse.

En variante, le sonar selon l'invention comprend une antenne auxiliaire telle que décrite dans la demande de brevet FR 2769372.

Selon un mode particulier de réalisation concernant le sonar multi-aspect tel que décrit précédemment, on utilise des estimations d'angles de site obtenues à partir de la carte bathymétrique pour corriger les variations du mouvement de la première antenne de réception lors de la formation des voies des secteurs S2 et S3 ou d'au moins un de ces deux secteurs.

La carte bathymétrique peut être construite par différents moyens, par exemple au moyen d'un dispositif extérieur au sonar.

Avantageusement, les mesures de premiers angles de site utilisés pour estimer les angles de site sont des mesures de premiers angles de site de signaux rétrodiffusés provenant du premier secteur, c'est-à-dire issus d'impulsions acoustiques émises dans le premier secteur. Le fait d'estimer les angles de site des signaux rétrodiffusés issus d'impulsions émises dans les secteurs S2 et S3 à partir de premiers angles de site mesurés pour des signaux rétrodiffusés issus d'impulsions acoustiques émises dans le premier secteur permet d'obtenir, pour ces secteurs S2, S3, des images synthétiques présentant une résolution bien meilleure que sans réaliser de correction des mouvements parasite de l'antenne de réception lors de formations de voie des antennes synthétiques correspondant à ces secteurs et similaires à celles qui seraient obtenues en utilisant des mesures d'angles de site obtenues de façon directe par une antenne auxiliaire dont le lobe de réception couvrirait ces secteurs.

Selon une réalisation particulière, la carte bathymétrique est obtenue à partir de mesures de premiers angles de site de premiers signaux rétrodiffusés acquis dans le premier secteur S1. Les mesures des premiers angles de site sont obtenues au moyen de mesures de signaux rétrodiffusés obtenues au moyen d'un réseau 11 de transducteurs T5, T7 comprenant une pluralité de transducteurs répartis selon un deuxième axe Z2 perpendiculaire à la première antenne de réception physique 3, c'est-à-dire perpendiculaire au premier axe X1. Autrement dit, le réseau 11 comprend un empilement de transducteurs suivant la direction Z2. Une telle répartition des transducteurs permet de faire des mesures des premiers angles de site des signaux rétrodiffusés puisque le réseau 11 de transducteurs présente une directivité selon l'axe Z2. Le rapport signal/bruit sur les mesures d'angle de site effectuées par cette antenne est nettement plus élevé que celui obtenu sur l'antenne de réception 3. L'axe Z2 est perpendiculaire au premier axe X1 et est parallèle, localement, au plan de la première antenne physique, c'est-à-dire au plan formé par les membranes des transducteurs 5, 6. L'axe Z2 est parallèle à l'axe vertical z défini dans un référentiel terrestre, lorsque l'assiette de l'antenne de réception 3 est nulle. De préférence, le réseau 11 présente, selon l'axe Z2, une hauteur supérieure à la hauteur de la première antenne de réception 3.

Avantageusement, les transducteurs T5, T7 formant le réseau 11 de transducteurs sont dimensionnés et configurés de façon que seul le premier secteur S1 soit totalement compris dans leurs lobes de réception. Nous verrons que cela permet de limiter le nombre de capteurs requis, et donc le coût du sonar, tout en permettant d'obtenir les images synthétiques et les voies d'antennes synthétiques de très haute résolution.

Par configuration des transducteurs, on entend leurs positionnements par rapport à l'antenne de réception et leurs directions de pointage. Autrement dit, les transducteurs du réseau 11 de transducteurs sont dimensionnés et configurés de façon que le premier secteur S1 soit compris, en gisement, dans leurs lobes principaux de réception et de façon que les autres secteurs S2, S3 soient au moins partiellement situés, en gisement, en dehors de leurs lobes principaux de réception. Avantageusement, l'ouverture en gisement des lobes de réception des transducteurs du réseau 11 est sensiblement égale à l'ouverture en gisement du premier secteur S1.

Sur la réalisation de la figure 3, les autres secteurs S2, S3 sont situés complètement en dehors des lobes principaux des transducteurs formant le réseau de transducteurs 11. Sur cette figure, le sonar 1 selon l'invention comprend une deuxième antenne de réception 12. Cette deuxième antenne de réception 12 est une antenne physique identique à la première antenne élémentaire 5 et superposée à la première antenne élémentaire 5 selon le deuxième axe Z2. Elle comprend des troisièmes transducteurs T7 répartis selon un troisième axe X3 parallèle au premier axe X1. Les troisièmes transducteurs T7 sont identiques aux transducteurs T5 et espacés du même pas selon l'axe X1. Le réseau 11 de transducteurs au moyen duquel on mesure les premiers angles de site comprend les transducteurs de la première antenne élémentaire 5 et de la deuxième antenne élémentaire 12. Autrement dit, le réseau 11 de transducteurs est formé par la première antenne de réception élémentaire 5 et par la deuxième antenne de réception 12. Ces deux antennes constituent une antenne interférométrique.

En variante, la deuxième antenne de réception 12 est plus courte, selon l'axe X1 que la première antenne de réception. Autrement dit, elle comprend moins de capteurs selon l'axe X1. Dans une autre variante, la deuxième antenne de réception 12 présente des transducteurs présentant une taille différente, selon la direction X1 et/ou selon la direction Z2 que les premiers transducteurs T5.

Dans une autre variante, le réseau 11 de transducteurs présentant un unique transducteur selon la direction X1 et un réseau linéaire de transducteurs espacés selon l'axe Z2. Le réseau de transducteurs comprend, ou non, un des transducteurs de la première antenne de réception 3. Ces antennes ne présentent toutefois pas de sélectivité en gisement et permettent d'obtenir des voies d'antennes synthétiques moins bien résolues en gisement.

Les transducteurs formant le réseau 11 peuvent s'étendre de façon linéaire selon le deuxième axe Z2 ou bien former une surface courbe adoptant la courbe de la coque cylindrique mais présentant une extension selon le deuxième axe Z2.

En résumé, les transducteurs formant le réseau 11 de transducteurs sont configurés et dimensionnés afin que le réseau 11 ne permette pas d'accéder directement aux estimations des angles de site des signaux rétrodiffusés par des cibles situées dans tous les secteurs S1, S2, S3 mais uniquement dans un de ces secteurs. Dans l'exemple non limitatif de la demande de brevet, ce secteur est le secteur S1, c'est-à-dire le secteur latéral. Cette solution est économique du point de vue logiciel et du point de vue matériel puisqu'elle ne nécessite pas de prévoir un réseau de transducteurs permettant de couvrir tous les secteurs. Elle est, par exemple, plus économique qu'une solution qui consisterait à former une antenne interférométrique à partir de la première antenne de réception et d'une deuxième antenne de réception identique et superposée à la première antenne de réception selon la direction Z2. Le nombre de transducteurs de la deuxième antenne de réception serait doublé par rapport au nombre de transducteurs de la deuxième antenne de réception du sonar selon l'invention ce qui serait plus coûteux du point de vue matériel, du point de vue encombrement et du point de vue du traitement des données. En revanche, la solution proposée basée sur le réseau 11 selon l'invention constituant une antenne interférométrique permet d'obtenir des angles de site, dans le premier secteur S1, avec une résolution identique à celle d'une antenne interférométrique qui serait obtenue en superposant la première antenne de réception 3 et une autre antenne identique. La solution proposée ne nécessite pas une antenne interférométrique coûteuse sur échantillonnée selon l'axe X1.

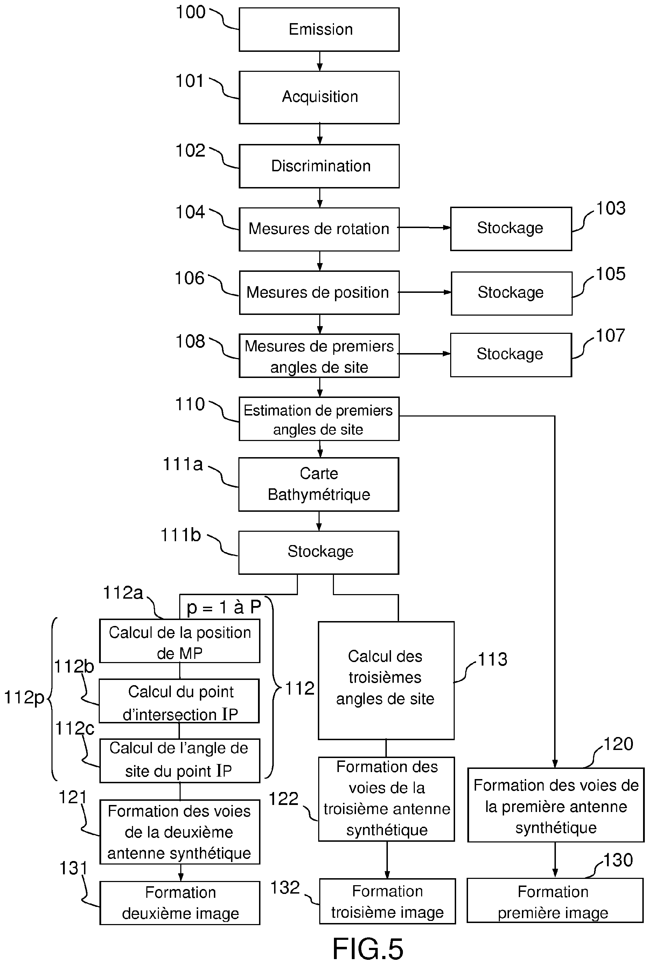

L'invention se rapporte également à un procédé de formation d'antenne synthétique d'un sonar selon l'invention sur R récurrences du sonar. Le sonar décrit précédemment est apte à mettre en œuvre le procédé selon l'invention. La figure 5 représente un schéma synoptique de ce procédé.

Les voies sont formées à partir des signaux de mesures obtenus à partir de R récurrences.

Le procédé comprend, à chaque récurrence r avec r = 1 à R,

- une étape 100 d'émission des impulsions acoustiques discernables dans chaque secteur S1, S2, S3, au moyen du dispositif d'émission 2, pendant l'avancée du sonar 1 selon l'axe X1,
- une étape 101 d'acquisition de mesures de signaux rétrodiffusés par la zone observée au moyen de la première antenne de réception 3,
- une étape 102 de discrimination des mesures des signaux acquises par la première antenne de réception, par exemple, au moyen du premier module 40, qui peut être ultérieure à l'étape 103,
- une étape 103 de stockage des mesures des signaux acquises par la première antenne de réception 3, par exemple dans une première mémoire 70,
- une étape 104 de mesure des rotations (roulis, tangage et lacet) de la première antenne de réception ou du porteur PO au moyen d'au moins un gyromètre,
- une étape 105 de stockage des mesures de rotation, par exemple dans une deuxième mémoire 71, pouvant ou non être la première mémoire,
- une étape 106 de mesure de la position du porteur, ou de l'antenne de réception 3, dans un référentiel terrestre au moyen d'un dispositif de mesure de position 72. Cette étape permet d'obtenir les mesures de position en latitude, longitude et immersion du porteur PO dans un référentiel terrestre,
- une étape 107 de stockage des mesures de position du sonar, par exemple, dans une troisième mémoire 73, pouvant ou non la première mémoire et/ou la deuxième mémoire.

Le procédé comprend également une étape 120, 121, 122 de formation des voies des antennes synthétiques à partir de mesures de signaux rétrodiffusés acquis par la première antenne de réception 3 sur R récurrences successives du sonar 1. Le procédé comprend également étape 130, 131, 132 de formation d'images synthétique I1, I2, I3 à partir des voies des antennes synthétiques respectives lors d'étapes respectives 130, 131, 132.

Dans le cas d'un sonar mono-aspect, l'étape 102 n'est pas mise en œuvre, l'étape 120, 121, 122 est une étape de formation de voie d'une antenne synthétique et l'étape 130, 131, 132 est une étape de formation de l'image synthétique associée.

L'invention se rapporte à un procédé comprenant une étape 120, 121, 122 de formation, sur R récurrences, des voies de chaque antenne synthétique correspondant au sonar considéré à partir des mesures de signaux rétrodiffusés par la zone observée issus d'impulsions acoustiques émises dans chaque secteur considéré. Dans cette étape, on corrige les variations du mouvement de la première antenne de réception lors de la formation des voies des antennes synthétiques comme cela est expliqué précédemment. Selon l'invention, lors de la formation des voies d'au moins une antenne synthétique, on utilise des estimations d'angles de site de signaux rétrodiffusés obtenues à partir d'une carte bathymétrique comprenant des positions tridimensionnelles d'une pluralité de points de la zone observée.

Nous allons maintenant décrire les autres étapes du procédé selon l'invention dans le cas du sonar multi-aspect dans lequel on construit les voies des antennes synthétiques correspondant aux deuxièmes et troisièmes secteurs à partir d'une carte bathymétrique obtenue à partir de mesures de premiers angles de site obtenues au moyen du réseau 11 de transducteurs.

L'invention se rapporte à un procédé de formation des voies des antennes synthétiques correspondant à l'étape 120, 121, 122. L'étape 120, 121, 122 de formation des voies des antennes synthétique sur R récurrences successives comprend, une étape 120 de formation des voies de la première antenne synthétique à partir de mesures de premiers signaux rétrodiffusés issus du premier secteur S1 et des étapes 121, 122 de formation de voies des deux autres antennes synthétiques à partir de deuxièmes mesures de deuxièmes et respectivement de troisièmes signaux rétrodiffusés issus des impulsions acoustiques émises dans le deuxième et respectivement dans le troisième secteur lors desquelles on corrige les variations de mouvement de la première antenne de réception en effectuant une autocalibration par intercorrélation des récurrences successives en utilisant des mesures de rotation de l'antenne de réception obtenues au moyen dudit au moins un gyromètre et en utilisant, pour déterminer des deuxièmes et troisièmes plans images, des estimations de deuxièmes et respectivement de troisièmes angles de site de signaux rétrodiffusés calculés à partir d'une carte bathymétrique. Les mesures de rotation sont ensuite projetées sur les deuxièmes et troisièmes plans images et utilisées pour réaliser l'autocalibration associée à la deuxième et respectivement à la troisième antenne synthétique. La carte bathymétrique est par exemple obtenue à partir des mesures des premiers angles de site. Les étapes 120 à 122 sont réalisées par le deuxième module 41. Ces étapes 120, 121 122 sont précédées d'une étape de discrimination, réalisée au moyen du premier module 40 pour discriminer les mesures des signaux selon les secteurs des impulsions acoustiques dont ils sont issus. Chaque étape 120, 121, 122 comprend une étape, non représentée, de sélection des signaux nécessaires à la formation des voies de l'antenne synthétique considérée parmi les signaux mesurées par la première antenne physique 3.

Le procédé comprend également, préalablement aux étapes 120, 121, 122, une étape 108 réalisée pour chaque récurrence, de mesure de premiers angles de site des premiers signaux rétrodiffusés à un nombre P d'instants de sonde tp, avec p= 1 à P espacés deux à deux d'une période élémentaire T prédéfinie et débutant à un premier instant de sonde t1 postérieur à l'instant d'émission de l'impulsion acoustique associée et espacée de ce dernier d'une durée D prédéfinie. Autrement dit, à chaque récurrence, on mesure des premiers angles de site de premiers signaux rétrodiffusés par P points de sonde Pp mesurés par la première antenne de réception 3 à P instants de sonde tp. Ces mesures sont faites dans le repère du réseau 11 par le réseau 11. Dans le cas de la figure 3, les premiers angles de site sont estimés à partir de premières mesures de premiers signaux rétrodiffusés effectuées par la première antenne élémentaire 5 et à partir de mesures supplémentaires des premiers signaux rétrodiffusés effectuées par la deuxième antenne de réception 12 lors d'une récurrence.

L'étape 120 de formation de voies de la première antenne synthétique est réalisée à partir de premières mesures de premiers signaux rétrodiffusés issus d'impulsions émises dans le premier secteur lors des R récurrences. Les premières mesures sont réalisées, dans le mode de réalisation représenté sur les figures, au moyen de la première antenne de réception élémentaire 5. Lors de cette étape, on corrige les variations de mouvement de l'antenne de réception en effectuant une autocalibration par intercorrélation des récurrences successives. Pour corriger ces variations, on utilise la mesure des rotations de l'antenne de réception obtenues avec ledit au moins un gyromètre et on utilise des estimations des premiers angles de site des premiers signaux rétrodiffusés issus d'impulsions acoustiques émises dans le premier secteur S1 pour déterminer les premiers plans images sur lesquels on projette les mesures de rotation obtenues au moyen du gyromètre de sorte à obtenir les projections qui sont utilisées pour réaliser l'autocalibration de la première antenne synthétique. Les estimations des premiers angles de site correspondent aux mesures des premiers angles de site réalisées par le réseau de transducteurs 11 et transposées, lors de l'étape 110, dans le référentiel terrestre à partir des mesures de position et de rotations du sonar réalisées lors des étapes 104 et 106. Cette méthode permet d'obtenir des voies de la première antenne synthétique présentant une très haute résolution identique aux voies d'une antenne synthétique classique dont les variations de mouvement de l'antenne physique sont corrigées au moyen du procédé décrit dans la demande de brevet FR 2769372.

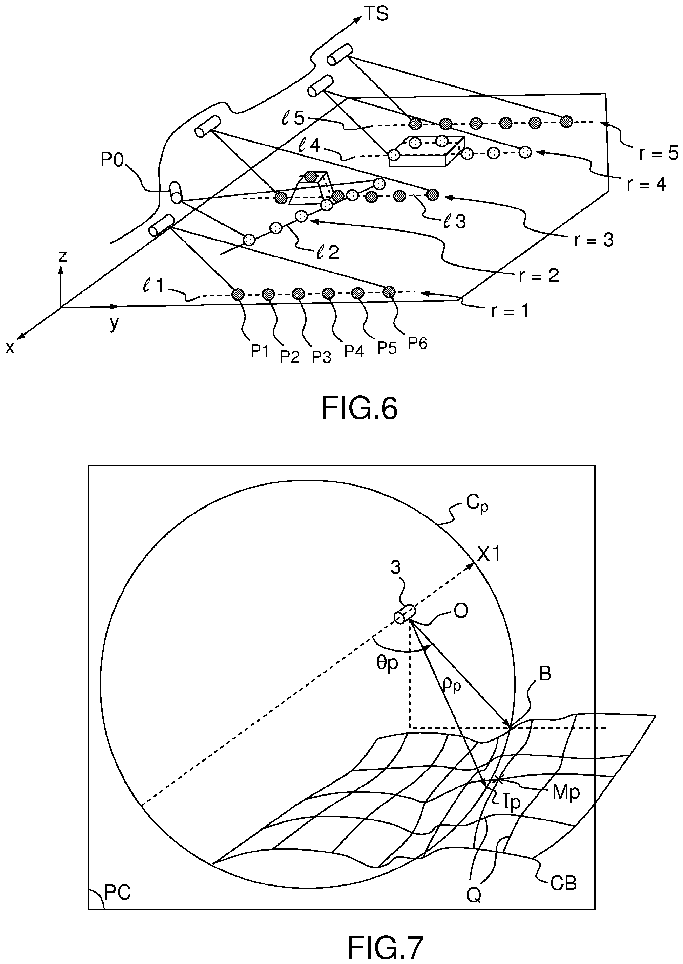

Le procédé comprend une étape 111a de réalisation de la carte bathymétrique de la zone observée à partir des estimations des premiers angles de site obtenues lors des R récurrences et une étape de stockage 111b de la carte bathymétrique, par exemple dans une quatrième mémoire 74. La carte bathymétrique comprend un ensemble de positions tridimensionnelles de points de sonde Pp dans le référentiel terrestre. L'étape 111 consiste, pour chaque récurrence, à positionner dans un référentiel terrestre des points de sondes à l'origine des premiers signaux rétrodiffusés mesurés à la récurrence considérée, à partir des mesures des premiers angles de site réalisées lors de l'étape 108, et des mesures de positions et de rotation mesurées réalisées lors des étapes 104, 106, ou bien à partir des estimations des premiers angles de site dans le référentiel terrestre obtenues lors de l'étape 110. Sur la figure 6, on a représenté, par des ronds, les positions des points de sonde Pp avec p= 1 à 6 dans un référentiel terrestre x, y, z, obtenues à chaque récurrence, la trajectoire TS du porteur PO et les positions du porteur PO à chaque récurrence r (r = 1 à 5). Pour plus de clarté les positions associées aux récurrences paires présentent un fond blanc et les positions associées aux récurrences impaires présentent un fond grisé. On a représenté pour chaque récurrence, en traits pleins, les limites du premier secteur S1 dans le plan vertical y, z comprenant le premier axe de visée v1 ainsi qu'en pointillés la ligne lr (avec l= 1 à 5) comprise dans ce plan et passant par les points de sonde Pp positionnées pour ladite récurrence. Les lignes pointillées lr, correspondant aux différentes récurrences, ne sont pas parallèles entre elles car la trajectoire du porteur n'est pas exactement rectiligne. Le maillage tridimensionnel formé par les points de sonde n'est pas forcément régulier dans le plan x, y, du fait des rotations et/ou changement de vitesse du porteur. Pour plus de clarté, les positions des points de sonde Pp ne sont référencées que pour la première récurrence.

Le procédé comprend une étape 112 d'estimation, pour chaque récurrence, de deuxièmes angles de site de deuxièmes signaux rétrodiffusés mesurés par la deuxième antenne élémentaire 6 à P instants de sonde tp, avec p= 1 à P espacés deux à deux d'une période élémentaire T prédéfinie et débutant à un premier instant de sonde t1 postérieur à l'instant d'émission de la deuxième impulsion acoustique correspondante et séparé de ce dernier de la durée D. Elle comprend également une étape 113 d'estimation de troisièmes angles de site de troisièmes signaux rétrodiffusés mesurés par la deuxième antenne élémentaire 6 à P instants de sonde tp, avec p= 1 à P espacés deux à deux d'une période élémentaire T prédéfinie et débutant à un premier instant de sonde t1 postérieur à l'instant d'émission de la troisième impulsion acoustique correspondant et séparé de ce dernier de la durée D. Ces étapes sont réalisées à partir de la carte bathymétrique et des mesures de position et d'attitude du porteur lors des R récurrences réalisées lors des étapes 104, 106 relatives à la récurrence correspondante. Les étapes 121 et 122 utilisent, pour améliorer la précision de la mesure des rotations obtenue par le gyromètre, les estimations des deuxièmes et respectivement des troisièmes angles de site.

Nous allons maintenant décrire l'étape 112 d'estimation des deuxièmes angles de site. L'étape 113 d'estimation des troisièmes angles de site est réalisée de la même manière, mais à partir des signaux rétrodiffusés issus du troisième secteur S3. Elle ne sera pas décrite précisément. L'étape 112 comprend, pour chaque récurrence et pour chaque instant de sonde tp une étape 112p d'estimation du deuxième angle de site d'un deuxième signal rétrodiffusé d'une impulsion acoustique émise dans le deuxième secteur S2 et mesuré par la première antenne de réception 3 à l'instant de sonde tp. Cette étape 112p comprend :

- une étape 112a de calcul de la position du point Mp de la carte bathymétrique le plus proche de la position du point de sonde Pp dont est issu le deuxième signal rétrodiffusé en déterminant la position du point de la carte bathymétrique le plus proche de la portion d'un cercle Cp obtenu par rotation d'un point B situé à une distance $\rho_p$ du centre O de l'antenne de réception 3 selon le deuxième axe de visée v2 autour du premier axe X1, la distance $\rho_p$ étant la distance devant séparer le point de sonde Pp du centre O de la première antenne de réception 3 pour que la première antenne de réception mesure le deuxième signal rétrodiffusé par le point de sonde Pp à l'instant de sonde tp,
- une étape 112b de calcul d'un point d'intersection Ip entre la carte bathymétrique et la portion de cercle Cp à partir du point Mp, le point Ip correspondant à la position estimée du point de sonde ayant rétrodiffusé le deuxième signal,
- une étape 112c de calcul de l'angle de site du point Ip, dans le référentiel terrestre à partir de la position d'Ip, de la mesure de position du porteur Po ou de l'antenne de réception 3 et notamment de son altitude par rapport au fond marin et de la distance $\rho_p$.

Le cercle Cp est situé dans un plan PC perpendiculaire à l'axe X1. Sur la figure 7, on a représenté le cercle Cp contenant les points situés à une distance $\rho_p$ du centre O de l'antenne et ayant un angle de gisement θp de 55° ainsi que le point Mp le plus proche et l'intersection Ip entre Cp et la carte bathymétrique CB. Les points connus de la carte bathymétrique CB sont les points d'intersection du quadrillage Q. La portion du cercle utilisée est la portion du cercle située à tribord mais on pourrait aussi utiliser tout le cercle Cp. Le cercle Cp est une estimation du lieu de positions possibles du point de sonde Pp à l'origine du deuxième signal rétrodiffusé. Il s'agit de l'ensemble des points d'un cône dont l'axe est l'axe X1 et présentant une génératrice présentant un angle de gisement égal à celui du deuxième axe de visée v2 qui sont situés dans le plan PC. Autrement dit cela revient à estimer, lors de l'étape 112 des deuxièmes angles de site de deuxième signaux rétrodiffusés issus d'impulsions acoustiques émises selon le deuxième axe de visée v2, θ2 et situés à la distance $\rho_p$ du centre de l'antenne de réception 3.

La carte bathymétrique doit être mémorisée sur un nombre minimal Nm de récurrences qui permet de positionner les Pp points de sondes pour la récurrence courante lors de l'étape d'estimation des troisièmes angles de site (c'est-à-dire lors de l'étape d'estimation des angles de site pour le mode arrière). Ce nombre est le nombre de récurrences requis lorsque la rotation moyenne du sonar sur sa trajectoire est nulle et qu'il avance à la vitesse minimale $V_{min}$ (cas le moins favorable) :

$$N_m = \left\lceil 1 + \frac{\rho_{max} \, \sin\left(\left|\theta_S\right|\right)}{V_{min}.Tr} \right\rceil$$

$\rho_{max}$ est la portée maximale du sonar (c'est une distance maximale par rapport au centre de l'antenne appelée distance oblique), $\theta_S$ est l'angle de gisement relatif entre le premier axe de visée v1 et l'axe de visée vers l'arrière v3. Tr est l'intervalle de temps entre deux récurrences successives. Dès lors que la carte bathymétrique est réalisée pour Nm récurrences, l'estimation des angles de site pour la récurrence courante pour le mode arrière et la formation de la voie de la troisième antenne synthétique pour la récurrence courante, réalisée en utilisant ces angles de site, peuvent commencer. Pour le mode avant (formation des voies de la deuxième antenne synthétique), le calcul des angles de site ne peut pas commencer directement car la zone observée par le sonar selon le deuxième axe de visée v2 est située devant la zone explorée en mode latéral (selon v1). Toutes les mesures de position, de rotation et des signaux rétrodiffusés doivent être gardés en mémoire sur Nm récurrences en attente de la construction de la carte bathymétrique correspondant à la zone visée par le deuxième axe v2 à la récurrence courante.

Avantageusement, l'étape 112 comprend, pour chaque récurrence et pour chaque instant tp d'ordre supérieur à 1, avant l'étape 112a, une étape non représentée d'extraction d'une portion de la carte bathymétrique plus petite que la carte bathymétrique, les étapes 112a et 112b sont réalisées à partir de la portion de la carte bathymétrique. Cette étape permet d'accélérer les temps de traitement. Dans un exemple non limitatif, on utilise toute la carte bathymétrique pour tp tel que p= 1 puis, pour les instants tp d'ordre supérieurs, on utilise une portion de la carte bathymétrique située à une distance horizontale inférieure à un seuil prédéterminé du point d'intersection obtenu à l'instant d'ordre inférieur.

L'étape 112a est réalisée en calculant la distance de chaque point de la carte bathymétrique (ou de la sous-carte bathymétrique) et le cercle (ou arc de cercle). On obtient alors le point Mp qui est le point de la carte bathymétrique le plus proche de la portion considérée du cercle Cp. L'étape 112b est par exemple réalisée en calculant le point d'intersection Ip entre un plan horizontal (parallèle au plan (x, y)) passant par le point Mp et la portion de cercle Cp. Cela revient à approximer la carte bathymétrique par un plan horizontal dans le voisinage de Mp. Cette étape pourrait être réalisée de façon plus précise en utilisant plusieurs points de la carte bathymétrique pour estimer la surface formée par la carte bathymétrique dans le voisinage de Mp.

Dans un premier mode de réalisation, l'estimation du deuxième angle de site est l'angle calculé lors de l'étape 112c.

Dans une variante non représentée, l'étape 112 comprend l'étape 112a de calcul d'un premier point Mp, une première étape 112b de calcul d'un premier point d'intersection Ip, et une première étape 112c de calcul d'un premier angle de site, dans lesquelles, le point Ip est calculé à partir du plan horizontal passant par le point M. L'étape 112 comprend également une deuxième étape 112b de calcul d'un deuxième point d'intersection dans laquelle on cherche un deuxième point d'intersection entre la deuxième portion du cercle Cp et une surface formée à partir du point M et d'autres points de la carte bathymétrique afin d'améliorer la précision du positionnement du point Ip et si cette étape converge une deuxième étape de calcul d'angle de site, dans le référentiel terrestre, du deuxième point d'intersection. Le deuxième angle de site est alors l'angle de site calculé pour le deuxième point d'intersection. Cette méthode permet d'obtenir des estimations d'angles de site plus précis.

Avantageusement, les étapes 112p sont réalisées pour chaque instant tp en commençant à un instant de départ et en balayant les instants dans le sens croissant jusqu'au dernier instant (p=P) et en balayant les instants, depuis l'instant précédent l'instant de départ, dans le sens décroissant jusqu'au premier instant (p= 1), l'instant de départ étant différent du premier instant et du dernier instant. Ce procédé permet de gagner en robustesse.

L'invention a également pour objet un produit programme d'ordinateur comprenant des instructions de code de programme pour l'exécution des étapes du procédé selon l'invention lorsque le programme est exécuté sur ordinateur.

Les étapes de la méthode décrite peuvent être mises en œuvre au moyen d'un ou plusieurs processeurs programmables exécutant un programme d'ordinateur pour réaliser les fonctions de l'invention en opérant sur des données d'entrée (notamment les signaux rétrodiffusés, les données du gyromètre, la carte bathymétrique) et générant des données de sortie (voies d'antenne synthétique). Un programme d'ordinateur peut être écrit dans toute forme de langage de programmation, incluant des programmes compilés ou interprétés et le programme d'ordinateur peut être déployé dans toute forme incluant un programme autonome ou une sous-routine ; un élément ou une autre unité utilisable dans un environnement programmable. Un programme d'ordinateur peut être déployé pour être exécuté sur un ordinateur ou sur plusieurs ordinateurs sur un site ou distribués sur plusieurs sites et interconnectés par un réseau de communication.

## Revendications

1. Sonar (1) à antenne synthétique destiné à se déplacer selon un premier axe (X1), le sonar (1) comprenant un dispositif d'émission (2) configuré pour émettre, à chaque récurrence, au moins une impulsion acoustique vers une zone observée dans un ensemble sectorisé comprenant au moins un secteur, le sonar (1) comprenant une première antenne physique de réception (3) s'étendant selon le premier axe (X1) permettant d'acquérir des mesures de signaux rétrodiffusés issus de ladite impulsion et un dispositif de traitement (4) configuré pour former, sur R récurrences, pour chaque secteur de l'ensemble sectorisé, des voies d'antenne synthétique à partir de mesures de signaux rétrodiffusés par la zone observée issus d'impulsions acoustiques émises dans ledit secteur, le sonar (1) comprenant au moins un gyromètre, ledit dispositif de traitement (4) étant configuré de façon à corriger les variations du mouvement de la première antenne de réception lors de la formation des voies d'antenne synthétique dudit ensemble sectorisé en effectuant une autocalibration par intercorrélation des récurrences successives, en utilisant des mesures de rotation de la première antenne de réception (3) obtenues avec ledit au moins un gyromètre et en utilisant des estimations d'angles de site de signaux rétrodiffusés pour déterminer des plans images des signaux rétrodiffusés et pour projeter lesdites mesures de rotation sur lesdits plans images, les projections obtenues étant utilisées pour effectuer l'autocalibration, **caractérisé en ce que** dans ledit dispositif de traitement (4) lors de la formation des voies d'antenne synthétique d'au moins un secteur de l'ensemble sectorisé, appelé secteur bathymétrique, on utilise des estimations d'angles de site de signaux rétrodiffusés obtenues à partir d'une carte bathymétrique comprenant les positions tridimensionnelles, définies dans le référentiel terrestre, d'une pluralité de points de la zone observée.

2. Sonar selon la revendication 1, dans lequel le dispositif d'émission (2) est configuré pour émettre, à chaque récurrence, des impulsions acoustiques discernables vers une zone observée, dans des secteurs (S1, S2, S3) respectifs différents, comprenant un premier secteur (S1) et au moins un deuxième secteur (S2, S3), selon un premier axe de visée (v1) et respectivement un deuxième axe de visée (v2, v3) présentant des angles de gisement différents, dans lequel ledit au moins un secteur bathymétrique comprend au moins un deuxième secteur, et dans lequel la carte bathymétrique est obtenue à partir de mesures de premiers angles de site de premiers signaux rétrodiffusés issus d'impulsions acoustiques émises dans ledit premier secteur.

3. Sonar selon la revendication 2, comprenant un réseau (11) de transducteurs comprenant pluralité de transducteurs répartis selon un deuxième axe (Z2) perpendiculaire au premier axe (X1), lesdits transducteurs formant le réseau de transducteurs étant dimensionnés et configurés de façon que leurs lobes de réception couvrent le premier secteur (S1) mais que ledit au moins un deuxième secteur (S2) soit situé au moins partiellement en dehors de leurs lobes de réception, les premiers signaux rétrodiffusés étant acquis au moyen du réseau (11) de transducteurs.

4. Sonar à antenne synthétique selon la revendication 3, dans lequel l'antenne physique de réception (3) comprend une première antenne physique élémentaire (5) formée de premiers transducteurs (T5) dimensionnés et configurés de façon que leurs lobes de réception couvrent le premier secteur (S1) mais de façon que ledit au moins un deuxième secteur (S2) soit au moins partiellement situé en dehors de leurs lobes de réception, dans lequel le sonar (1) comprend une deuxième antenne physique élémentaire (6) formée de deuxièmes transducteurs (T6) dimensionnés et configurés de façon que leurs lobes de réception couvrent le premier et le deuxième secteurs (S1, S2), et dans lequel le dispositif de traitement (4) est configuré de façon à former, lors de la formation des voies d'antenne synthétique, des voies d'une première antenne synthétique à partir de mesures de premiers signaux rétrodiffusés issus du premier secteur (S1), acquises au moyen de la première antenne élémentaire (5) et des voies d'une deuxième antenne synthétique à partir de mesures de deuxièmes signaux rétrodiffusés issus d'impulsions émises dans ledit deuxième secteur (S2, S3), acquises au moyen de la deuxième antenne élémentaire (6).

5. Sonar à antenne synthétique selon la revendication précédente, dans lequel le réseau (11) de transducteurs est formé par la première antenne élémentaire (5) et une autre antenne (12) identique à la première antenne élémentaire (5) et superposée à la première antenne physique élémentaire (5) selon le deuxième axe (Z2).

6. Sonar à antenne synthétique selon l'une quelconque des revendications 1 à 2, dans lequel la carte bathymétrique est mémorisée dans une mémoire du sonar avant d'imager la zone observée.

7. Système sonar comprenant le sonar (1) selon l'une quelconque des revendications précédentes, et un porteur (PO), le sonar (1) étant installé sur le porteur (PO).

8. Procédé de formation de voies d'antennes synthétiques d'un sonar sur R récurrences du sonar, le sonar (1) étant destiné à se déplacer selon un premier axe (X1), le sonar (1) comprenant un dispositif d'émission (2) configuré pour émettre, à chaque récurrence, au moins une impulsion acoustique vers une zone observée dans un ensemble sectorisé comprenant au moins un secteur, le sonar (1) comprenant une première antenne physique de réception (3) s'étendant selon le premier axe (X1) permettant d'acquérir des mesures de signaux rétrodiffusés issus de ladite au moins une impulsion et un dispositif de traitement (4) configuré pour former, sur R récurrences, pour chaque secteur de l'ensemble sectorisé, des voies d'antenne synthétique à partir de mesures de signaux rétrodiffusés par la zone observée issus d'impulsions acoustiques émises dans ledit secteur, le sonar (1) comprenant au moins un gyromètre, le procédé comprenant une étape (120, 121, 122) de formation, lors de laquelle on forme, pour chaque secteur sur R récurrences, des voies d'antenne synthétique à partir de mesures de signaux rétrodiffusés par la zone observée issus d'impulsions acoustiques émises dans ledit secteur, lors de laquelle, on corrige les variations du mouvement de la première antenne de réception lors de la formation des voies d'antenne synthétique dudit ensemble sectorisé en effectuant une autocalibration par intercorrélation des récurrences successives, en utilisant des mesures de rotation de la première antenne de réception (3) obtenues avec ledit au moins un gyromètre et en utilisant des estimations d'angles de site de signaux rétrodiffusés pour déterminer des plans images des signaux rétrodiffusés et pour projeter lesdites mesures de rotation sur lesdits plans images, les projections obtenues étant utilisées pour effectuer l'autocalibration, **caractérisé en ce que** lors de l'étape de formation lors de la formation des voies d'antenne synthétique d'au moins un secteur de l'ensemble sectorisé, appelé secteur bathymétrique, on utilise des estimations d'angles de site de signaux rétrodiffusés obtenues à partir d'une carte bathymétrique comprenant la position tridimensionnelle d'une pluralité de points de la zone observée.

9. Procédé de formations de voies d'antennes synthétiques selon la revendication 8, dans lequel le dispositif d'émission (2) est configuré pour émettre, à chaque récurrence, des impulsions acoustiques discernables vers une zone observée, dans des secteurs (S1, S2, S3) respectifs différents, comprenant un premier secteur (S1) et au moins un deuxième secteur (S2, S3), selon un premier axe de visée (v1) et respectivement un deuxième axe de visée (v2, v3) présentant des angles de gisement différents, dans lequel ledit au moins un secteur bathymétrique comprend au moins un deuxième secteur, et dans lequel la carte bathymétrique est obtenue à partir de mesures de premiers angles de site de premiers signaux rétrodiffusés issus d'impulsions acoustiques émises dans ledit premier secteur (S1).

10. Procédé de formation de voies d'antennes synthétiques selon la revendication 9, dans lequel le sonar comprenant un réseau (11) de transducteurs comprenant une pluralité de transducteurs élémentaires répartis selon un deuxième axe (Z2) perpendiculaire au premier axe (X1), lesdits transducteurs formant le réseau de transducteurs étant dimensionnés et configurés de façon que leurs lobes de réception couvrent le premier secteur (S1) mais que ledit au moins un deuxième secteur (S2) soit situé au moins partiellement en dehors de leurs lobes de réception, les premiers signaux rétrodiffusés étant acquis au moyen du réseau (11) de transducteurs, le procédé comprenant, pour chaque récurrence, une étape (108) de mesure de premiers angles de site de premiers signaux rétrodiffusés au moyen du réseau (11) de transducteurs, une étape (110) de calcul d'estimations de premiers angles de site, consistant à transposer des mesures des premiers angles de site dans un référentiel terrestre, le procédé comprenant une étape de réalisation (111) de la carte bathymétrique à partir des estimations des premiers angles de site, la carte bathymétrique comprenant des coordonnées tridimensionnelles, dans le référentiel terrestre, de points de sonde ayant rétrodiffusé les premiers signaux rétrodiffusés.

11. Procédé selon la revendication précédente, comprenant une étape (112) d'estimation des angles de site des signaux rétrodiffusés issus d'impulsions émises dans ledit secteur bathymétrique à partir de la carte bathymétrique, comprenant pour chacun des signaux rétrodiffusés, une étape (112a) de calcul de la position d'un point Mp de la carte bathymétrique le plus proche d'une portion d'un cercle Cp obtenu par rotation, autour du premier axe (X1) d'un point B situé sur l'autre axe de visée (v2) à une distance de l'antenne correspondant à la distance séparant l'antenne d'un point de sonde ayant généré le signal rétrodiffusé, une étape (112b) de calcul d'un premier point d'intersection Ip entre la carte bathymétrique et la portion de cercle Cp à partir du point le plus proche Mp, et une première étape (112c) de calcul, dans le référentiel terrestre, de l'angle de site du point d'intersection (112c).

12. Procédé selon la revendication précédente, dans lequel le point d'intersection Ip est le point d'intersection entre un plan horizontal, dans le référentiel terrestre, passant par le point le plus proche Mp, et la portion de cercle Cp.

13. Procédé selon la revendication 11, comprenant une deuxième étape de calcul d'un deuxième point d'intersection Ip entre la carte bathymétrique et la portion de cercle Cp à partir du point le plus proche Mp et d'autres points de la carte bathymétrique, et si un deuxième point d'intersection est obtenu, une deuxième étape (112c) de calcul de l'angle de site du deuxième point d'intersection (112c).

14. Procédé selon l'une quelconque des revendications 9 à 13, dans lequel l'antenne physique de réception (3) comprend une première antenne physique élémentaire (5) formée de premiers transducteurs (T5) dimensionnés et configurés de façon que leurs lobes de réception couvrent le premier secteur (S1) mais de façon que ledit au moins un deuxième secteur (S2) soit au moins partiellement situés en dehors de leurs lobes de réception, l'étape (120, 121, 122) de formation de voies comprenant une étape (120) de formation de voies d'une première antenne synthétique à partir de mesures de signaux rétrodiffusés issus d'impulsions émises dans ledit premier secteur (S1) acquises au moyen de la première antenne élémentaire (5), lors de laquelle les estimations d'angles de site de signaux rétrodiffusés utilisées pour déterminer des plans images des signaux rétrodiffusés et pour projeter lesdites mesures de rotation sur lesdits plans images sont des estimations des premiers angles de site des premiers signaux rétrodiffusés, les premiers signaux rétrodiffusés étant issus d'impulsions émises dans ledit premier secteur, les estimations des premiers angles de site étant des transpositions des mesures des premiers angles de site dans le référentiel terrestre.

15. Produit programme d'ordinateur comprenant des instructions de code de programme pour l'exécution des étapes du procédé selon l'une quelconque des revendications 8 à 14, lorsque le programme est exécuté sur ordinateur.

**Patentansprüche**

1. Sonar (1) mit synthetischer Antenne, bestimmt zum Bewegen entlang einer ersten Achse (X1), wobei das Sonar (1) ein Sendegerät (2) umfasst, das zum Aussenden, bei jedem erneuten Auftreten, wenigstens eines akustischen Pulses zu einer beobachteten Zone in einem sektorierten Satz konfiguriert ist, der wenigstens einen Sektor umfasst, wobei das Sonar (1) eine erste physische Empfangsantenne (3) umfasst, die entlang der ersten Achse (X1) verläuft und die Erfassung von Messwerten von zurückgestreuten Signalen zulässt, die von dem Puls stammen, und ein Verarbeitungsgerät (4), konfiguriert zum Bilden, bei R erneuten Auftretensfällen, für jeden Sektor des sektorierten Satzes, von synthetischen Antennenkanälen auf der Basis von Messwerten von Signalen, die von der beobachteten Zone zurückgestreut werden, die von in dem Sektor ausgesendeten akustischen Pulsen stammen, wobei das Sonar (1) wenigstens ein Gyrometer umfasst, wobei das Verarbeitungsgerät (4) so konfiguriert ist, dass es die Variationen der Bewegung der ersten Empfangsantenne bei der Bildung der synthetischen Antennenkanäle des sektorierten Satzes korrigiert, durch Durchführen einer Selbstkalibration durch Kreuzkorrelation der aufeinanderfolgenden erneuten Auftretensfälle, unter Nutzung von Rotationsmesswerten der ersten Empfangsantenne (3), erhalten mit dem wenigstens einen Gyrometer, und unter Nutzung von Schätzungen von Elevationswinkeln von zurückgestreuten Signalen zum Bestimmen von Bildebenen der zurückgestreuten Signale und zum Projizieren der Rotationsmesswerte auf die Bildebenen, wobei die erhaltenen Projektionen zum Durchführen der Selbstkalibration benutzt werden, **dadurch gekennzeichnet, dass** in dem Verarbeitungsgerät (4) bei der Bildung der synthetischen Antennenkanäle von wenigstens einem Sektor des sektorierten Satzes, bathymetrischer Sektor genannt, Schätzungen von Elevationswinkeln von zurückgestreuten Signalen benutzt werden, die von einer bathymetrischen Karte erhalten wurden, die die dreidimensionalen Positionen, definiert im terrestrischen Bezugsrahmen, von mehreren Punkten der beobachteten Zone umfasst.

2. Sonar nach Anspruch 1, wobei das Sendegerät (2) so konfiguriert ist, dass es bei jedem erneuten Auftreten wahrnehmbare akustische Pulse zu einer beobachteten Zone in verschiedenen jeweiligen Sektoren (S1, S2, S3) aussendet, umfassend einen ersten Sektor (S1) und wenigstens einen zweiten Sektor (S2, S3), entlang einer ersten Visierachse (v1) bzw. einer zweiten Visierachse (v2, v3), mit unterschiedlichen Peilwinkeln, wobei der wenigstens eine bathymetrische Sektor wenigstens einen zweiten Sektor umfasst und wobei die bathymetrische Karte auf der Basis von Messwerten von ersten Elevationswinkeln von ersten zurückgestreuten Signalen erhalten wird, die von im ersten Sektor ausgesendeten akustischen Pulsen stammen.

3. Sonar nach Anspruch 2, das ein Netzwerk (11) von Wandlern umfasst, die mehrere entlang einer zweiten Achse (Z2) lotrecht zur ersten Achse (X1) verteilte Wandler umfassen, wobei die Wandler das Wandlernetzwerk bilden, so dimensioniert und konfiguriert, dass ihre Empfangskeulen den ersten Sektor (S1) abdecken, aber so, dass sich wenigstens ein zweiter Sektor (S2) wenigstens teilweise außerhalb ihrer Empfangskeulen befindet, wobei die ersten zurückgestreuten Signale mittels des Netzwerks (11) von Wandlern erfasst werden.

4. Sonar mit synthetischer Antenne nach Anspruch 3, wobei die physische Empfangsantenne (3) eine erste elementare physische Antenne (5) gebildet von ersten Wandlern (T5) umfasst, die so dimensioniert und konfiguriert sind, dass ihre Empfangskeulen den ersten Sektor (S1) abdecken, aber so, dass sich wenigstens ein zweiter Sektor (S2) wenigstens teilweise außerhalb ihrer Empfangskeulen befindet, wobei das Sonar (1) eine zweite elementare physische Antenne (6) bestehend aus zweiten Wandlern (T6) umfasst, so dimensioniert und konfiguriert, dass ihre Empfangskeulen den ersten und zweiten Sektor (S1, S2) abdecken, und wobei das Verarbeitungsgerät (4) so konfiguriert ist, dass es bei der Bildung der der synthetischen Antennenkanäle Kanäle einer ersten synthetischen Antenne auf der Basis von Messwerten von ersten zurückgestreuten Signalen bildet, die von dem ersten Sektor (S1) stammen, erfasst mittels der ersten elementaren synthetischen Antenne (5), und Kanäle einer zweiten synthetischen Antenne auf der Basis von Messwerten von zweiten zurückgestreuten Signalen, die von in dem zweiten Sektor (S2, S3) ausgesendeten Pulsen stammen, erfasst mittels der zweiten elementaren Antenne (6).

5. Sonar mit synthetischer Antenne nach dem vorherigen Anspruch, wobei das Netzwerk (11) von Wandlern durch die erste elementare Antenne (5) und eine mit der ersten elementaren Antenne (5) identische andere Antenne (12) gebildet und auf die erste elementare physische Antenne (5) entlang der zweiten Achse (Z2) überlagert wird.

6. Sonar mit synthetischer Antenne nach einem der Ansprüche 1 bis 2, wobei die bathymetrische Karte in einem Speicher des Sonars vor dem Abbilden der beobachteten Zone gespeichert wird.

7. Sonarsystem, das das Sonar (1) nach einem der vorherigen Ansprüche und einen Träger (PO) umfasst, wobei das Sonar (1) auf dem Träger (PO) installiert ist.

8. Verfahren zum Bilden von synthetischen Antennenkanälen eines Sonars bei R erneuten Auftretensfällen des Sonars, wobei das Sonar (1) zum Bewegen entlang einer ersten Achse (X1) bestimmt ist, wobei das Sonar (1) ein Sendegerät (2) umfasst, konfiguriert zum Aussenden, bei jedem erneuten Auftreten, von wenigstens einem akustischen Puls zu einer beobachteten Zone in einem sektorierten Satz, der wenigstens einen Sektor umfasst, wobei das Sonar (1) eine erste physische Empfangsantenne (3), die entlang der ersten Achse (X1) verläuft und die Erfassung von Messwerten von zurückgestreuten Signalen zulässt, die von wenigstens einem Puls stammen, und ein Verarbeitungsgerät (4) umfasst, konfiguriert zum Bilden, bei R erneuten Auftretensfällen, für jeden Sektor des sektorierten Satzes, von synthetischen Antennenkanälen auf der Basis von Messwerten von Signalen, die von der beobachteten Zone zurückgestreut wurden, die von in dem Sektor ausgesendeten akustischen Pulsen stammen, wobei das Sonar (1) wenigstens ein Gyrometer umfasst, wobei das Verfahren einen Bildungsschritt (120, 121, 122) beinhaltet, während dessen, für jeden Sektor auf R erneuten Auftretensfällen, synthetische Antennenkanäle auf der Basis von Messwerten von Signalen gebildet werden, die von der beobachteten Zone zurückgestreut werden, die von akustischen Pulsen in dem Sektor stammen, in welchem Schritt die Variationen der Bewegung der ersten Empfangsantenne bei der Bildung der synthetischen Antennenkanäle des sektorierten Satzes unter Durchführung einer Selbstkalibration durch Kreuzkorrelation der aufeinanderfolgenden erneuten Auftretensfälle korrigiert werden, unter Nutzung von Rotationsmesswerten der ersten Empfangsantenne (3), erhalten mit dem wenigstens einen Gyrometer, und unter Nutzung von Schätzungen von Elevationswinkeln von zurückgestreuten Signalen zum Bestimmen von Bildebenen der zurückgestreuten Signale und zum Projizieren der Rotationsmesswerte auf die Bildebenen, wobei die erhaltenen Projektionen zum Durchführen der Selbstkalibration benutzt werden, **dadurch gekennzeichnet, dass** während des Bildungsschrittes beim Bilden der synthetischen Antennenkanäle von wenigstens einem Sektor des sektorierten Satzes, bathymetrischer Sektor genannt, Schätzungen von Elevationswinkeln von zurückgestreuten Signalen benutzt werden, die von einer bathymetrischen Karte erhalten werden, die die dreidimensionale Position mehrerer Punkte der beobachteten Zone umfasst.

9. Verfahren zum Bilden von synthetischen Antennenkanälen nach Anspruch 8, wobei das Sendegerät (2) zum Aussenden, bei jedem erneuten Auftreten, von wahrnehmbaren akustischen Pulsen zu einer beobachteten Zone in unterschiedlichen jeweiligen Sektoren (S1, S2, S3) konfiguriert ist, umfassend einen ersten Sektor (S1) und wenigstens einen zweiten Sektor (S2, S3) entlang einer ersten Sichtlinie (v1) bzw. einer zweiten Sichtlinie (v2, v3), mit unterschiedlichen Peilwinkeln, wobei der wenigstens eine bathymetrische Sektor wenigstens einen zweiten Sektor umfasst und wobei die bathymetrische Karte von Messwerten von ersten Elevationswinkeln von ersten zurückgestreuten Signalen erhalten wird, die von im ersten Sektor (S1) ausgesendeten akustischen Pulsen stammen.

10. Verfahren zum Bilden von synthetischen Antennenkanälen nach Anspruch 9, wobei das Sonar ein Netzwerk (11) von Wandlern umfasst, die mehrere elementare Wandler umfassen, verteilt entlang einer zweiten Achse (Z2) lotrecht zur ersten Achse (X1), wobei die Wandler das Netzwerk von Wandlern bilden, so dimensioniert und konfiguriert, dass ihre Empfangskeulen den ersten Sektor (S1) abdecken, aber so, dass sich der wenigstens eine zweite Sektor (S2) wenigstens teilweise außerhalb ihrer Empfangskeulen befindet, wobei die ersten zurückgestreuten Signale mittels des Netzwerks (11) von Wandlern erfasst werden, wobei das Verfahren für jedes erneute Auftreten einen Schritt (108) des Messens von ersten Elevationswinkeln von ersten zurückgestreuten Signalen mittels des Netzwerks (11) von Wandlern, einen Schritt (110) des Berechnens von Schätzungen von ersten Elevationswinkeln, die das Transponieren von Messwerten der ersten Elevationswinkel in einem terrestrischen Bezugsrahmen involviert, beinhaltet, wobei das Verfahren einen Schritt (111) des Produzierens der bathymetrischen Karte der Schätzungen der ersten Elevationswinkel beinhaltet, wobei die bathymetrische Karte dreidimensionale Koordinaten im terrestrischen Bezugsrahmen von Sondenpunkten beinhaltet, die die ersten zurückgestreuten Signale zurückgestreut haben.

11. Verfahren nach dem vorherigen Anspruch, das einen Schritt (112) des Schätzens von Elevationswinkeln der zurückgestreuten Signale beinhaltet, die von Pulsen stammen, die in dem bathymetrischen Sektor auf der Basis der bathymetrischen Karte ausgesendet wurden, beinhaltend, für jedes der zurückgestreuten Signale, einen Schritt (112a) des Berechnens der Position eines Punkts Mp der bathymetrischen Karte, der einem Abschnitt eines Kreises Cp am nächsten liegt, der durch Drehen, um die erste Achse (X1), eines Punkts B erhalten wird, der sich auf der anderen Sichtlinie (v2) in einem Abstand von der Antenne entsprechend der Distanz befindet, der die Antenne von einem Sondenpunkt trennt, der das zurückgestreute Signal erzeugt hat, einen Schritt (112b) des Berechnens eines ersten Schnittpunkts Ip zwischen der bathymetrischen Karte und dem Kreisabschnitt Cp von dem nächstliegenden Punkt Mp, und einen ersten Schritt (112c) des Berechnens, in dem terrestrischen Bezugsrahmen, des Elevationswinkels des Schnittpunkts (112c).

12. Verfahren nach dem vorherigen Anspruch, wobei der Schnittpunkt Ip der Schnittpunkt zwischen einer horizontalen Ebene, im terrestrischen Bezugsrahmen, der durch den nächstliegenden Punkt Mp verläuft, und dem Kreisabschnitt Cp ist.

13. Verfahren nach Anspruch 11, das einen zweiten Schritt des Berechnens eines zweiten Schnittpunkts Ip zwischen der bathymetrischen Karte und dem Kreisabschnitt Cp vom nächstliegenden Punkt Mp und von anderen Punkten auf der bathymetrischen Karte und, wenn ein zweiter Schnittpunkt erhalten wird, einen zweiten Schritt (112c) des Berechnens des Elevationswinkels des zweiten Schnittpunkts (112c) beinhaltet.

14. Verfahren nach einem der Ansprüche 9 bis 13, wobei die physische Empfangsantenne (3) eine erste elementare physische Antenne (5) gebildet von ersten Wandlern (T5) umfasst, so dimensioniert und konfiguriert, dass ihre Empfangskeulen den ersten Sektor (S1) abdecken, aber so, dass sich der wenigstens eine zweite Sektor (S2) wenigstens teilweise außerhalb ihrer Empfangskeulen befindet, wobei der Schritt (120, 121, 122) des Bildens von Kanälen einen Schritt (120) des Bildens von Kanälen einer ersten synthetischen Antenne auf der Basis von Messwerten von zurückgestreuten Signalen beinhaltet, die von im ersten Sektor (S1) ausgesendeten Pulsen stammen, erfasst mittels der ersten elementaren Antenne (5), in welchem Schritt die Schätzungen von Elevationswinkeln von zurückgestreuten Signalen, benutzt zum Bestimmen von Bildebenen der zurückgestreuten Signale und zum Projizieren der Drehmesswerte auf die Bildebenen, Schätzungen der ersten Elevationswinkel der ersten zurückgestreuten Signale sind, wobei die ersten zurückgestreuten Signale von im ersten Sektor ausgesendeten Pulsen stammen, wobei die Schätzungen der ersten Elevationswinkel Transpositionen der Messwerte der ersten Elevationswinkel im terrestrischen Bezugssystem sind.

15. Computerprogrammprodukt, das Programmcode-Befehle zum Ausführen der Schritte des Verfahrens nach einem der Ansprüche 8 bis 14 umfasst, wenn das Programm auf einem Computer ausgeführt wird.

## Claims

1. A synthetic antenna sonar (1) intended to move along a first axis (X1), the sonar (1) comprising an emission device (2) configured to emit, on each recurrence, at least one acoustic pulse to an observed area in a sectored set comprising at least one sector, the sonar (1) comprising a first physical reception antenna (3) extending along the first axis (X1) for acquiring measurements of backscattered signals originating from said pulse, and a processing device (4) configured to form, on R recurrences for each sector of the sectored set, synthetic antenna channels from measurements of signals backscattered by the observed area originating from acoustic pulses emitted in said sector, the sonar (1) comprising at least one gyrometer, said processing device (4) being configured so as to correct the variations of the movement of the first reception antenna during the formation of the synthetic antenna channels of said sectored set by performing a self-calibration by cross-correlation of the successive recurrences, using rotation measurements of the first reception antenna (3) obtained with said at least one gyrometer and using estimates of elevation angles of backscattered signals for determining image planes of the backscattered signals and for projecting said rotation measurements onto said image planes, the obtained projections being used to perform the self-calibration,
**characterised in that**, in said processing device (4) during the formation of the synthetic antenna channels of at least one sector of the sectored set, called bathymetric sector, estimates of elevation angles of backscattered signals are used that are obtained from a bathymetric map comprising the three-dimensional positions, defined in the terrestrial reference frame, of a plurality of points of the observed zone.

2. The sonar as claimed in claim 1, wherein the emission device (2) is configured to emit, on each recurrence, discernible acoustic pulses to an observed area, in different respective sectors (S1, S2, S3), comprising a first sector (S1) and at least one second sector (S2, S3), along a first boresight (v1) and a second boresight (v2, v3), respectively, having different bearing angles, wherein said at least one bathymetric sector comprises at least one second sector, and wherein the bathymetric map is obtained from measurements of first elevation angles of first backscattered signals originating from acoustic pulses emitted in said first sector.

3. The sonar as claimed in claim 2, comprising an array (11) of transducers comprising a plurality of transducers distributed along a second axis (Z2) perpendicular to the first axis (X1), said transducers forming the transducer array being dimensioned and configured so that their reception lobes cover the first sector (S1), but so that said at least one second sector (S2) is located at least partially outside their reception lobes, the first backscattered signals being acquired by means of the array (11) of transducers .

4. The synthetic antenna sonar as claimed in claim 3, wherein the physical reception antenna (3) comprises a first elementary physical antenna (5) made up of first transducers (T5) dimensioned and configured so that their reception lobes cover the first sector (S1), but so that said at least one second sector (S2) is at least partially located outside their reception lobes, wherein the sonar (1) comprises a second elementary physical antenna (6) made up of second transducers (T6) dimensioned and configured so that their reception lobes cover the first and second sectors (S1, S2), and wherein the processing device (4) is configured so as to form, during the formation of the synthetic antenna channels, channels of a first synthetic antenna from measurements of first backscattered signals originating from the first sector (S1), acquired by means of the first elementary antenna (5), and channels of a second synthetic antenna from measurements of second backscattered signals originating from pulses emitted in said second sector (S2, S3), acquired by means of the second elementary antenna (6).

5. The synthetic antenna sonar as claimed in the preceding claim, wherein the array (11) of transducers is formed by the first elementary antenna (5) and another antenna (12) identical to the first elementary antenna (5) and superimposed on the first elementary physical antenna (5) along the second axis (Z2).

6. The synthetic antenna sonar as claimed in any one of claims 1 to 2, wherein the bathymetric map is stored in a memory of the sonar before imaging the observed area.

7. A sonar system comprising the sonar (1) as claimed in any one of the preceding claims, and a carrier (PO), the sonar (1) being installed on the carrier (PO).

8. A method for forming synthetic antenna channels of a sonar on R recurrences of the sonar, the sonar (1) being intended to move along a first axis (X1), the sonar (1) comprising an emission device (2) configured to emit, on each recurrence, at least one acoustic pulse to an observed area in a sectored set comprising at least one sector, the sonar (1) comprising a first physical reception antenna (3) extending along the first axis (X1) for acquiring measurements of backscattered signals originating from said at least one pulse and a processing device (4) configured to form, on R recurrences, for each sector of the sectored set, synthetic antenna channels from measurements of signals backscattered by the observed area originating from acoustic pulses emitted in said sector, the sonar (1) comprising at least one gyrometer, the method comprising a formation step (120, 121, 122), during which, for each sector on R recurrences, synthetic antenna channels are formed from measurements of signals backscattered by the observed area originating from acoustic pulses in said sector, during which step the variations of the movement of the first reception antenna are corrected during the formation of the synthetic antenna channels of said sectored set by performing a self-calibration by cross-correlation of the successive recurrences, using rotation measurements of the first reception antenna (3) obtained with said at least one gyrometer and using estimates of elevation angles of backscattered signals to determine image planes of the backscattered signals and for projecting said rotation measurements on said image planes, the obtained projections being used to perform the self-calibration, **characterised in that**, during the formation step during the formation of the synthetic antenna channels of at least one sector of the sectored set, called bathymetric sector, estimates are used of elevation angles of backscattered signals obtained from a bathymetric map comprising the three-dimensional position of a plurality of points of the observed area.

9. A method for forming synthetic antenna channels as claimed in claim 8, wherein the emission device (2) is configured to emit, on each recurrence, discernible acoustic pulses to an observed area, in different respective sectors (S1, S2, S3), comprising a first sector (S1) and at least one second sector (S2, S3), along a first boresight (v1) and a second boresight (v2, v3), respectively, having different bearing angles, wherein said at least one bathymetric sector comprises at least one second sector, and wherein the bathymetric map is obtained from measurements of first elevation angles of first backscattered signals originating from acoustic pulses emitted in said first sector (S1).

10. A method for forming synthetic antenna channels as claimed in claim 9, wherein the sonar comprises an array (11) of transducers comprising a plurality of elementary transducers distributed along a second axis (Z2) perpendicular to the first axis (X1), said transducers forming the array of transducers being dimensioned and configured so that their reception lobes cover the first sector (S1), but so that said at least one second sector (S2) is located at least partially outside their reception lobes, the first backscattered signals being acquired by means of the array (11) of transducers, the method comprising, for each recurrence, a step (108) of measuring first elevation angles of first backscattered signals by means of the array (11) of transducers, a step (110) of computing estimates of first elevation angles involving transposing measurements of the first elevation angles in a terrestrial reference frame, the method comprising a step (111) of producing the bathymetric map from the estimates of the first elevation angles, the bathymetric map comprising three-dimensional coordinates, in the terrestrial reference frame, of probe points having backscattered the first backscattered signals.

11. The method as claimed in the preceding claim, comprising a step (112) of estimating elevation angles of the backscattered signals originating from pulses emitted in said bathymetric sector from the bathymetric map, comprising, for each of the backscattered signals, a step (112a) of computing the position of a point Mp of the bathymetric map closest to a portion of a circle Cp obtained by rotating, about the first axis (X1), a point B located on the other boresight (v2) at a distance from the antenna corresponding to the distance separating the antenna from a probe point that generated the backscattered signal, a step (112b) of computing a first intersection point Ip between the bathymetric map and the circle portion Cp from the closest point Mp, and a first step (112c) of computing, in the terrestrial reference frame, the elevation angle of the intersection point (112c).

12. The method as claimed in the preceding claim, wherein the intersection point Ip is the intersection point between a horizontal plane, in the terrestrial reference frame, passing through the closest point Mp, and the circle portion Cp.

13. The method as claimed in claim 11, comprising a second step of computing a second intersection point Ip between the bathymetric map and the circle portion Cp from the closest point Mp and from other points on the bathymetric map, and, if a second intersection point is obtained, a second step (112c) of computing the elevation angle of the second intersection point (112c).

14. The method as claimed in any one of claims 9 to 13, wherein the physical reception antenna (3) comprises a first elementary physical antenna (5) made up of first transducers (T5) dimensioned and configured so that their reception lobes cover the first sector (S1) but so that said at least one second sector (S2) is at least partially located outside their reception lobes, the step (120, 121, 122) of forming channels comprising a step (120) of forming channels of a first synthetic antenna from measurements of backscattered signals originating from pulses emitted in said first sector (S1) acquired by means of the first elementary antenna (5), during which step the estimates of elevation angles of backscattered signals used for determining image planes of the backscattered signals and for projecting said rotation measurements onto said image planes are estimates of the first elevation angles of the first backscattered signals, the first backscattered signals originating from pulses emitted in said first sector, the estimates of the first elevation angles being transpositions of the measurements of the first elevation angles in the terrestrial reference system.

15. A computer program product comprising program code instructions for executing the steps of the method as claimed in any one of claims 8 to 14, when the program is executed on a computer.

EP 3 117 237 B1

| 3 | Première antenne élémentaire | Deuxième antenne élémentaire |
|---|---|---|
| 70 | Première | Mémoire |

11

4 — Dispositif de traitement

2 — Dispositif d'émission

40 — Premier module

41 — Deuxième module

12 — Deuxième antenne de réception

10 — Dispositif d'affichage

74 — Quatrième mémoire

71 — Deuxième mémoire

73 — Troisième mémoire

72 — Dispositif de mesure de positions

9 — Centrale inertielle

FIG.1

FIG.2

FIG.3

FIG.4

FIG.5

FIG.6

FIG.7

**EP 3 117 237 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2769372
- US 4244036 A, Raven